# EUROPÄISCHE PATENTSCHRIFT

(11) **EP 1 832 643 B1**
(45) Veröffentlichungstag und Bekanntmachung des Hinweises auf die Patenterteilung: **07.04.2010**
(21) Anmeldenummer: 07003457.4
(22) Anmeldetag: 19.02.2007
(51) Int. Cl.: C09K 19/42, C09K 19/30, C09K 19/20, C09K 19/34

(54) **Flüssigkristallines Medium und Flüssigkristallanzeige**
Liquid crystalline medium and liquid-crystal display
Milieu liquide cristallin et dispositif d'affichage à cristaux liquides

(30) Priorität: 10.03.2006 DE 102006011204
(43) Veröffentlichungstag der Anmeldung: 12.09.2007
(73) Patentinhaber: Merck Patent GmbH, 64293 Darmstadt (DE)
(72) Erfinder: Hirschmann, Harald, 64291 Darmstadt (DE); Weidner, Martina, 64839 Münster (DE); Wittek, Michael, Dr., 64285 Darmstadt (DE); Reiffenrath, Volker, 64380 Rossdorf (DE); Schuler, Brigitte, 63762 Grossostheim (DE); Czanta, Markus, Dr., 64289 Darmstadt (DE); Bender, Renate, 64291 Darmstadt (DE)

(56) Entgegenhaltungen:
- WO-A-95/30723
- WO-A-98/08791
- WO-A-2004/104137
- DE-A1- 4 434 851
- DE-A1- 4 441 963
- DE-A1- 19 511 632
- DE-A1-102004 030 315

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur. Daneben gibt es auch Zellen, die mit einem elektrischen Feld parallel zur Substrat- und Flüssigkristallebene arbeiten, wie den IPS-Zellen ("in-plane switching"). Vor allem die TN-, STN- und IPS- Zellen, insbesondere die TN-, STN- und IPS-Zellen, sind derzeit kommerziell interessante Einsatzgebiete für die erfindungsgemäßen Medien.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien eine niedrige Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur, eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit positiver dielektrischer Anisotropie, breiten nematischen Phasen, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN- oder der IPS-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher, mobile Videogeräte und großformatige Fernsehgeräte) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten.

Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den zunehmenden Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d . Δn) zu ereichen. Diese geringe optische Verzögerung führt zu einer meist ausreichend geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Für TV- und Videoanwendungen werden Displays mit geringen Schaltzeiten benötigt. Solche geringen Schaltzeiten lassen sich besonders dann realisieren, wenn Flüssigkristallmedien mit geringen Werten für die Viskosität, insbesondere der Rotationsviskosität γ₁ verwendet werden. Verdünnende Zusätze verringern jedoch in der Regel den Klärpunkt und damit den Arbeitstemperaturbereich des Mediums.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schnelle Schaltbarkeit, auch bei extrem tiefen Temperaturen (Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, welche die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, dass diese Aufgabe gelöst werden kann, wenn man in Anzeigen erfindungsgemäße Medien verwendet. Die erfindungsgemäßen Medien zeichnen sich durch sehr kleine Rotationsviskositäten γ₁ in Kombination mit einem hohen Klärpunkt (T_{Clp}) und guten Tieftemperatureigenschaften aus.

In der WO 95/30723 A1 wird eine STN-Flüssigkristallmischung mit Verbindungen der Formel 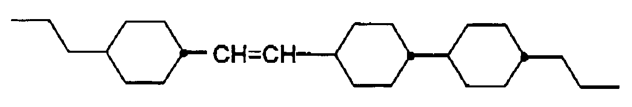 offenbart. Die endständigen Ketten dieser Verbindung sind gesättigte Alkylgruppen. Eine weitere Mischung wird dort offenbart, die unter anderem eine endständig ungesättigte Verbindung der Formel 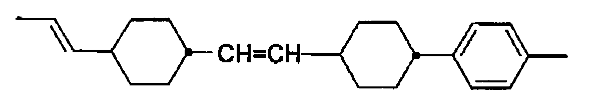 und alkylhomologe Verbindungen enthält.

DE 44 34 851 A1 und DE 44 41 963 A1 sind auf Cyclohexanderivate mit einer (-CH=CH-)-Brücke, die drei Cyclohexylenringe enthalten können und, die auch zwei Alkenylgruppen enthalten können, gerichtet.
DE 44 34 851 A1 offenbart jedoch nur entsprechende Verbindungen mit einer Alkyl- und einer Alkenyl-Endgruppe, wohingegen in DE 44 41 963 A1 auch Verbindungen mit zwei Alkenyl-Endgruppen genannt sind.

DE 10 2004 030 315 A1 offenbart eine Flüssigkristallmischung, die u. a. Verbindungen mit drei Cyclohexylenringen, einer (-CH=CH-)-Brücke und jeweils einer Alkyl- und einer Alkenyl-Endgruppe enthält.

WO 98 08791 A1 offenbart Verbindungen mit einer fluorierten Alkenyl-Endgruppe, die drei Cyclohexylenringe mit einer (-CH=CH-)-Brückengruppe aufweisen können.

DE 195 11 632 A1 und WO 2004/104137 A1 offenbaren Verbindungen mit einem Phenylenring und zwei Cyclohexylenringen, die durch eine (-CH=CH-)-Gruppe verbrückt sind. Die Verbindungen der
DE 195 11 632 A1 tragen zwei unpolare Endgruppen, wohingegen die der WO 2004/104137 A1 eine Alkyl-Endgruppe und eine polare Endgruppe tragen.

Gegenstand der Erfindung ist ein flüssigkristallines Medium auf der Basis eines Gemisches von Verbindungen, dadurch gekennzeichnet, dass es eine oder mehrere Verbindungen der Formel I 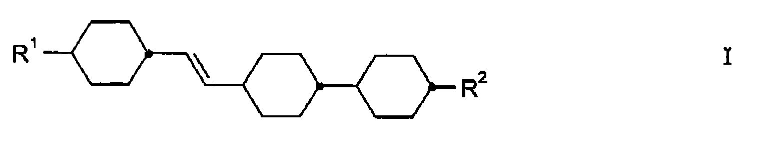 enthält, worin
- R¹ und R²: unabhängig voneinander, einen unsubstituierten oder einen mindestens einfach durch Halogen substituierten Alkenylrest mit bis zu 15 C-Atomen bedeuten, bevorzugt (CH₂)ₙ-CH=CH-(CH₂)ₘH, worin n und m unabhängig voneinander eine ganze Zahl von 0 bis 5, bevorzugt von 0 bis 2 bedeuten,
und zusätzlich eine oder mehrere Verbindungen ausgewählt aus den Verbindungen der Formeln K-1 bis K-11 enthält: 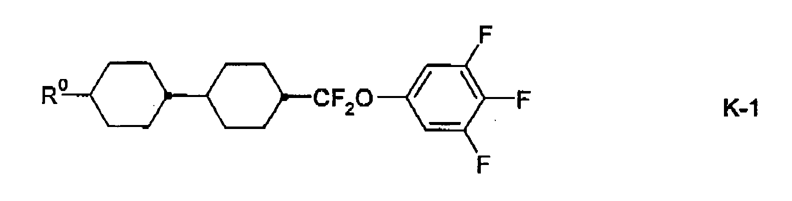 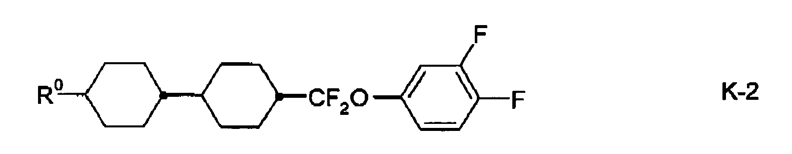 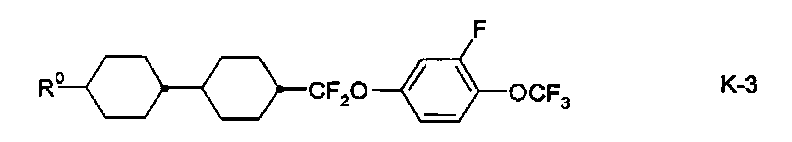 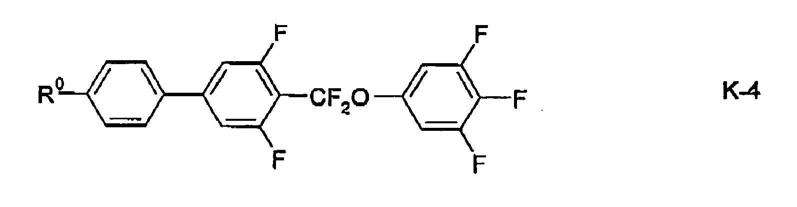 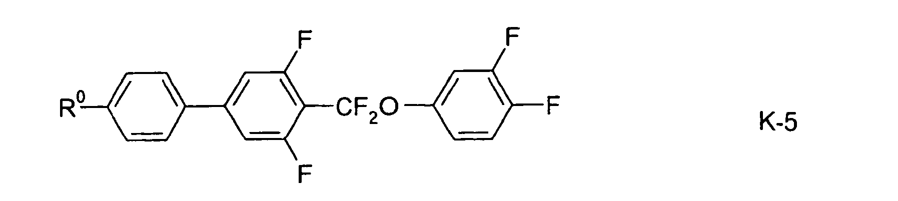 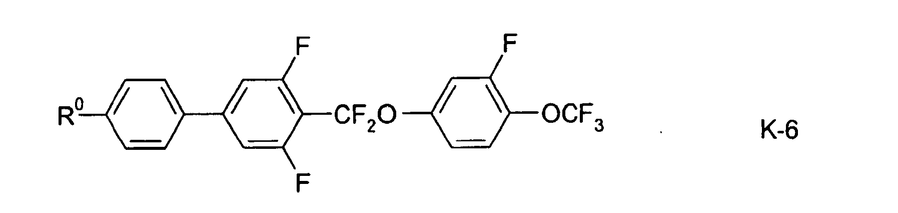 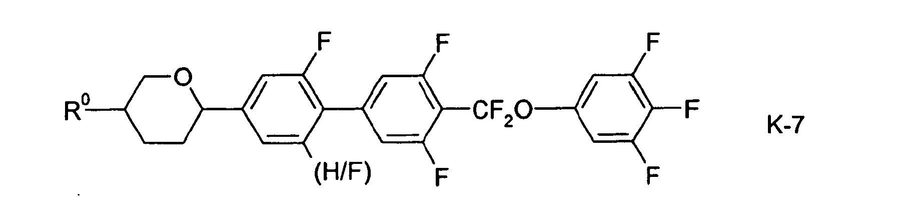 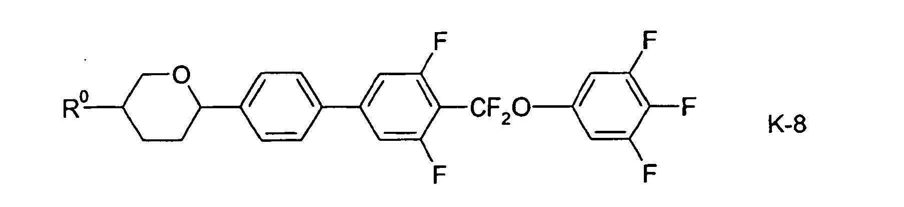 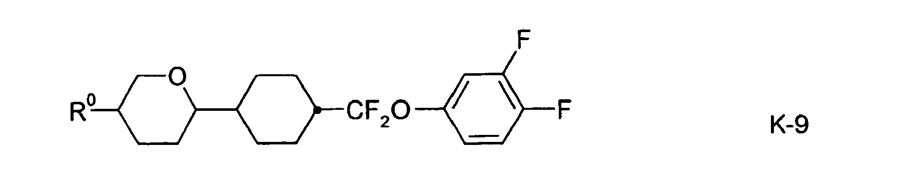 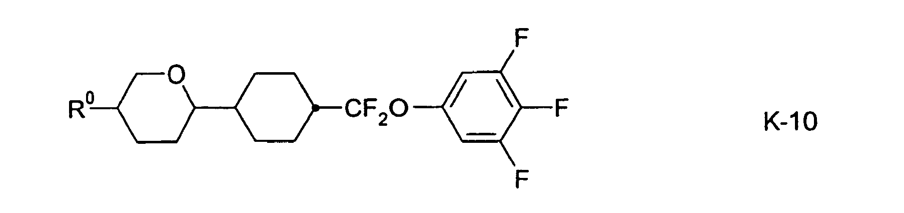 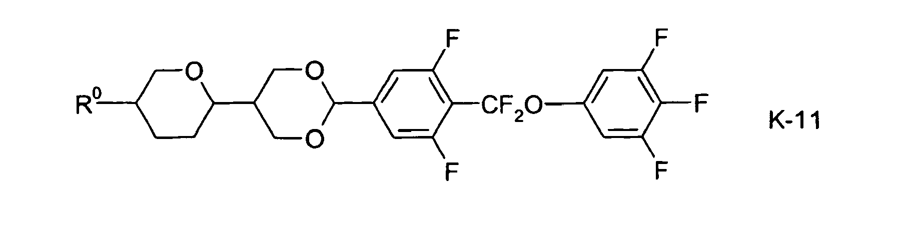 worin
- R⁰: n-Alkyl, Oxaalkyl, Fluoralkyl oder Alkenyl mit jeweils bis zu 9 C-Atomen
bedeutet.

Bevorzugt enthalten die erfindungesgemäßen Medien eine oder mehrere Verbindungen ausgewhlt aus der Gruppe der Verbindungen der Formeln K-4, K-5, K-7 und K-8, besonders bevorzugt der Formeln K-4 und/oder K-8.

Die Verbindungen der Formeln I und der Formeln K sind in reinem Zustand farblos und bilden flüssigkristalline Mesophasen in einem für die elektrooptische Verwendung günstig gelegenen Temperaturbereich. Chemisch und thermisch sind sie stabil.

Die Verbindungen der Formel I werden erfindungsgemäß vorzugsweise mit weiteren hochpolaren Komponenten mit Δε > 8 und mit einer oder mehreren neutralen Komponenten (-1,5 < Δε < 3), die - wenigstens zum Teil - gleichzeitig eine geringe optische Anisotropie (Δn < 0,08) besitzen, kombiniert um die flüssigkristallinen Medien zu erhalten.

Die Alkenylreste R¹ und R² können ein geradkettiger oder verzweigter Substituent sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R¹ einen mindestens einfach durch Halogen substituierten Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R¹ bzw. R² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Die Verbindungen der Formeln I und K werden nach an sich bekannten Methoden dargestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Gegenstand der Erfindung sind auch elektrooptische Anzeigen (insbesondere MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Rotationsviskosität, thermischer Stabilität und dielektrischer Anisotropie übertreffen signifikant bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Übliche Mischungssysteme weisen zwar vergleichbare Klärpunkte und vergleichbar günstige Viskositäten auf, besitzen jedoch ein Δε von nur +3. Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es unter Beibehaltung der nematischen Phase bis -20 °C und bevorzugt bis -30 °C, besonders bevorzugt bis -40 °C, einen Klärpunkt oberhalb 60 °C, vorzugsweise oberhalb 65 °C, besonders bevorzugt oberhalb 70 °C, gleichzeitig dielektrische Anisotropiewerte Δε ≥ 3, vorzugsweise ≥ 5, insbesondere auch ≥ 7 und einen hohen Wert für den spezifischen Widerstand zu erreichen, wodurch hervorragende TN- und IPS-Anzeigen erzielt werden können. Insbesondere sind die Mischungen durch sehr geringe Rotationsviskositäten gekennzeichnet.

Es versteht sich, dass durch geeignete Wahl der Komponenten der erfindungsgemäßen Mischungen auch höhere Klärpunkte (z.B. oberhalb 90 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen oder Mischungen mit höheren Klärpunkten erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE 3022818 A1) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Der nematische Phasenbereich hat vorzugsweise eine Breite von mindestens 90°C, insbesondere von mindestens 100°C. Vorzugsweise erstreckt sich dieser Bereich mindestens von -20° bis +70°C bevorzugt mindestens -30° bis +70°C.

Bei Flüssigkristallanzeigen ist eine kleine Schaltzeit erwünscht. Dies gilt besonders für Anzeigen für die Videowiedergabe. Neben der Rotationsviskosität γ₁ beeinflußt auch der Tiltwinkel die Schaltzeit.

Messungen des "Voltage Holding-ratio" (HR) [S. Matsumoto et al., Liquid Crystals 5,1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel

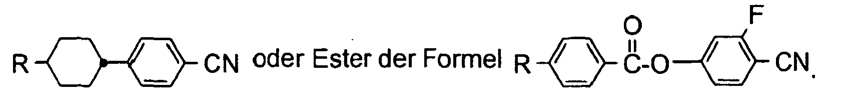

Die Verbindung der Formel I umfasst vorzugsweise Verbindungen, worin R¹ und R² je eine ein- oder zweifach, insbesondere eine einfach ungesättigte, geradkettige Alkenylgruppe bedeutet. Besonders bevorzugt sind Alkenylreste der Formeln -CH=CH₂, -CH=CH-CH₃, -CH₂-CH=CH, -CH₂CH₂-CH=CH₂, -CH₂-CH₂-CH=CH-CH₃. Besonders bevorzugt sind Verbindungen der Formeln l-1 bis l-11.

Besonders bevorzug enthalten die erfindungsgemäßen Medien eine oder mehrere Verbindungen der Formel I ausgewählt aus der Gruppe der sind daher Verbindungen der Formeln I-1 bis I-11, ganz besonders bevorzugt der Formeln I-1 bis I-4:

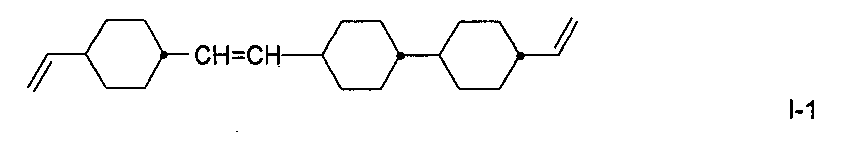

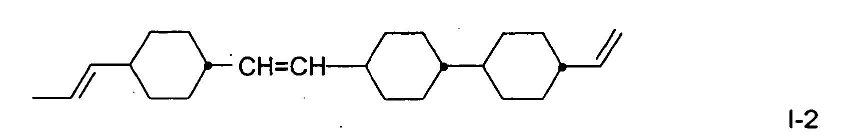

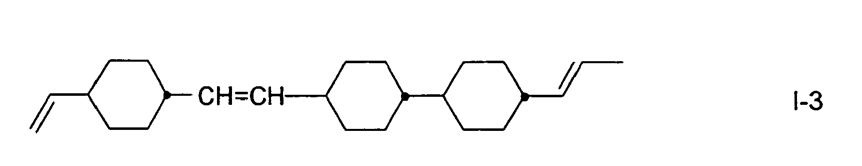

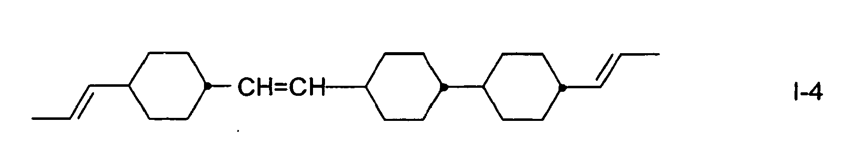

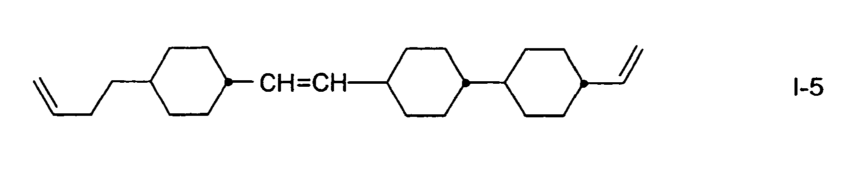

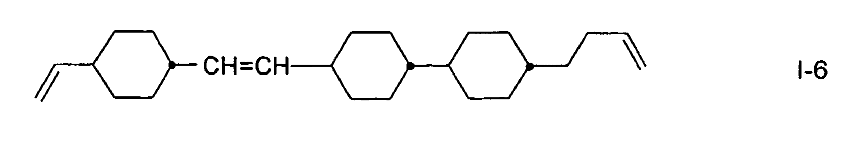

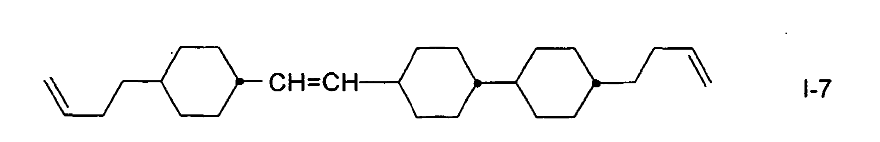

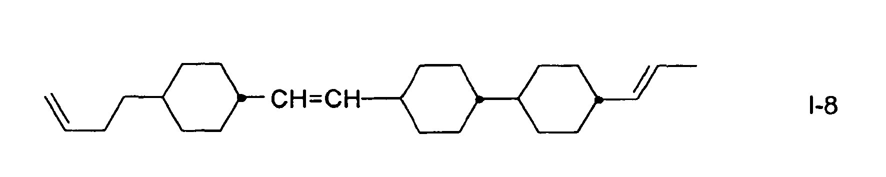

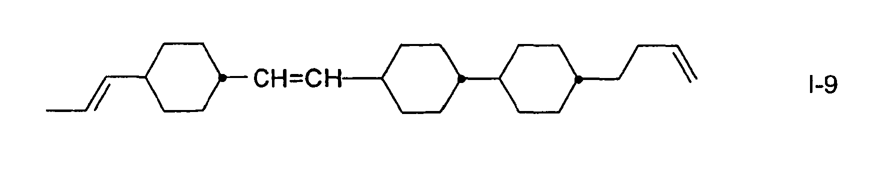

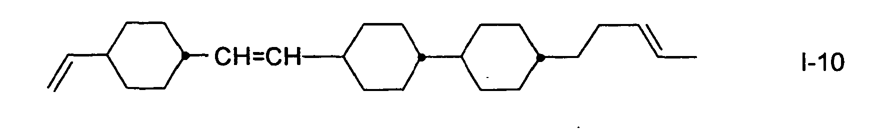

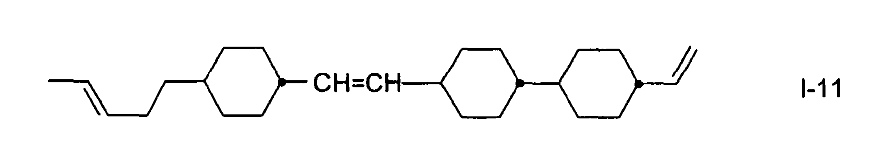

Die Doppelbindung zwischen den Cyclohexanringen besitzt bevorzugt eine E-Konfiguration. Besonders bevorzugt sind erfindungsgemäße flüssigkristalline Medien, die mindestens eine Verbindung der Formel I-1, I-2, I-3 und/oder I-4, insbesondere mindestens eine Verbindung der Formel I-1, enthalten.

Bevorzugte Ausführungsformen der Erfindung sind im folgenden angegeben:
- Das flüssigkristalline Medium ist dadurch gekennzeichnet, dass der Anteil an Verbindungen der Formel I im Gesamtgemisch 0,5 bis 25 Gew.% beträgt; bevorzugt beträgt er 1 bis 15 Gew.%.
- Das Medium enthält ein, zwei oder mehrere Verbindungen ausgewält aus der Gruppe der Verbindungen der Formeln I-1 bis I-11; bevorzugt aus der Gruppe der Verbindungen der Formeln I-1 bis I-4.
- Das Medium enthält eine Verbindung der Formeln I-1.
- Der Anteil an Verbindungen der Formeln K-1 bis K-11 am flüssigkristallinen Medium beträgt bevorzugt 5 bis 45 Gew.%, besonders bevorzugt 5 bis 30 Gew.%.
- Das Medium enthält ein, zwei oder mehrere Verbindungen ausgewält aus der Gruppe der Verbindungen der Formeln K-1 bis K-11; bevorzugt aus der Gruppe der Verbindungen der Formeln K-1, K-4 und K-8.
- Das Medium enthält eine oder mehrere Verbindungen der Formeln K-4.
- Das Medium enthält eine oder mehrere Verbindungen der Formeln K-8.
- Das Medium enthält zusätzlich ein, zwei oder mehr Zweikern-Verbindungen ausgewählt aus den Verbindungen der Formeln Z-1 bis Z-11 (allgemein Z), 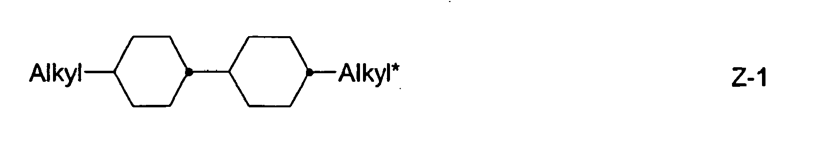 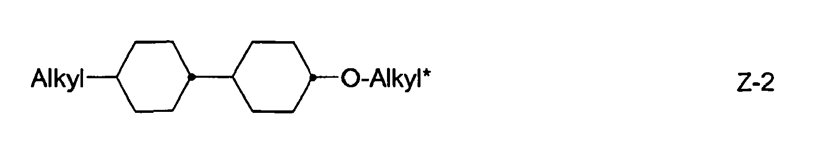 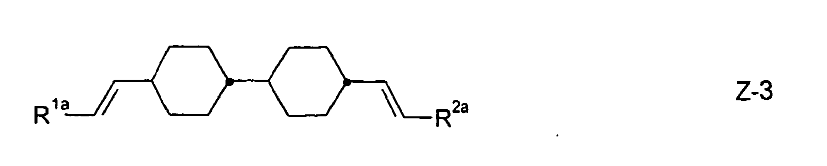 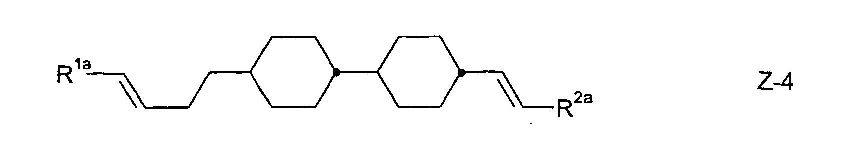 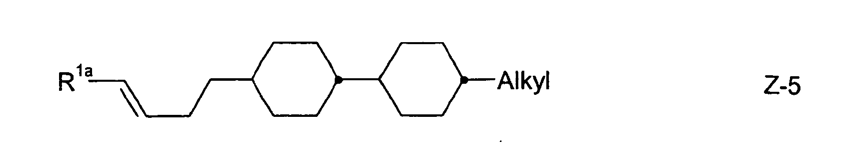 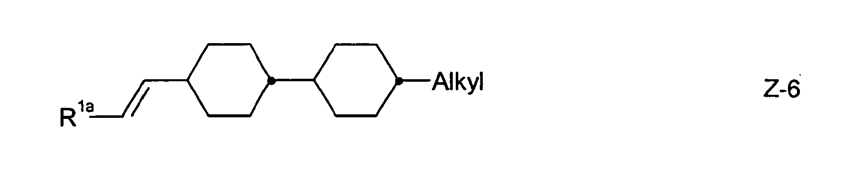 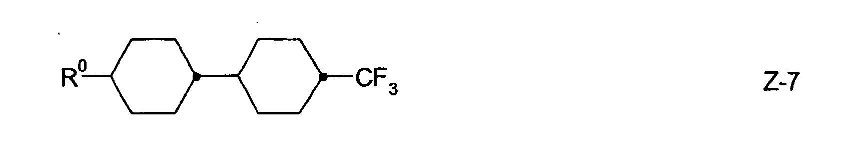 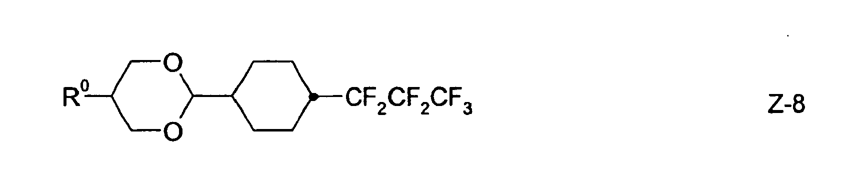 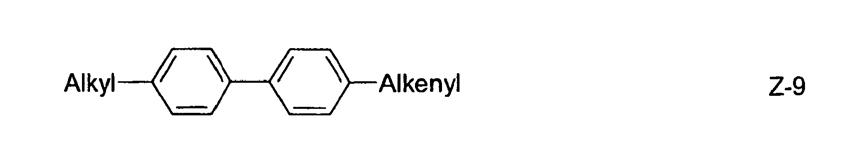 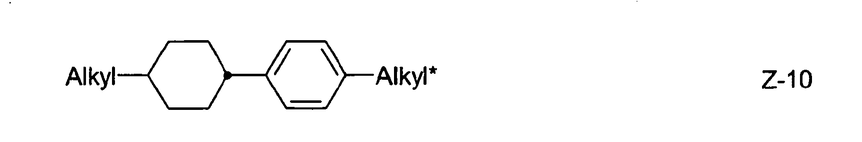 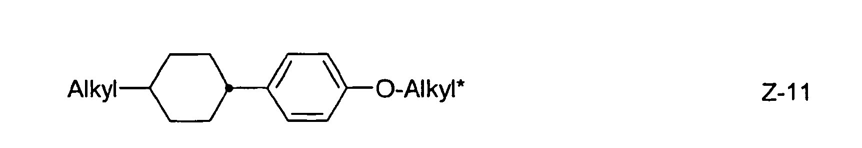
worin
- R^{1a} und R^{2a}: jeweils unabhängig voneinander H, CH₃, C₂H₅ oder n-C₃H₇ bedeuten, und

- R⁰: n-Alkyl, Oxaalkyl, Fluoralkyl oder Alkenyl mit jeweils bis zu 9 C-Atomen
bedeutet.

Alkyl, Alkyl* und Alkenyl besitzen die nachfolgend angegebenen Bedeutungen;

Von den genannten Zweikern-Verbindungen sind besonders bevorzugt die Verbindungen Z-3, Z-5, Z-6, Z-7 und Z-9, ganz besonders die Verbindungen der Formel Z-5 mit Alkyl gleich Propyl und R^{1a} gleich H oder Methyl, insbesondere mit R^{1a} gleich H.
- Der Anteil an Verbindungen der Formeln Z-1 bis Z-11 beträgt insgesamt 5 bis 70 Gew.% , bevorzugt 10 bis 50 Gew.% und besonders bevorzugt 15 bis 50 Gew.%. Der Anteil an Verbindungen der Formel Z-5 für sich beträgt vorzugsweise 10 bis 60 Gew.%, bevorzugt 15 bis 50 Gew.%.
- Das Medium enthält zusätzlich eine oder mehrere Verbindungen ausgewählt aus der Gruppe bestehend aus den allgemeinen Formeln II bis VI: 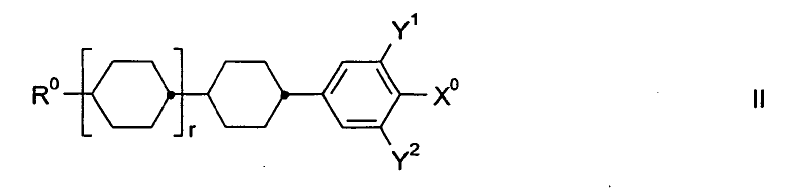 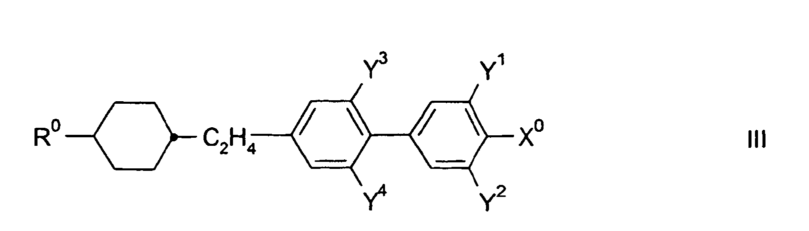 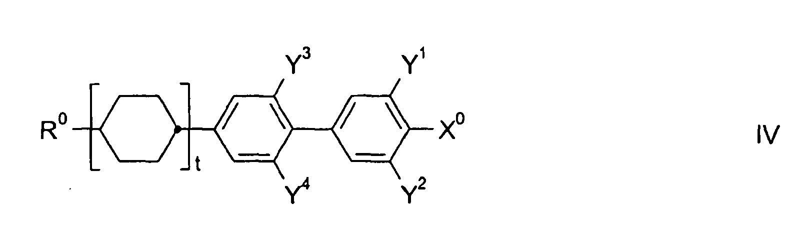 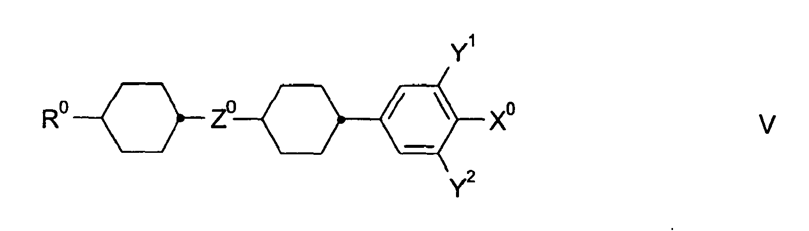 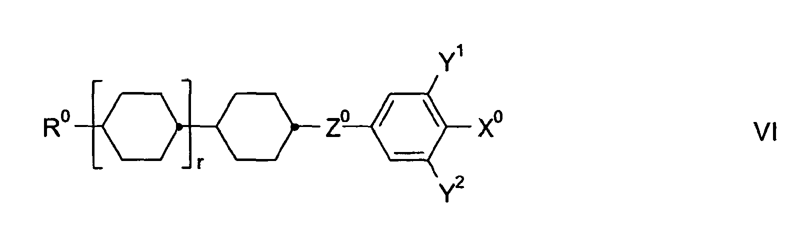
worin die einzelnen Reste die folgenden Bedeutungen haben:
- R⁰: n-Alkyl, Alkoxy, Oxaalkyl, Fluoralkyl oder Alkenyl mit jeweils bis zu 9 C-Atomen,
- X⁰: F, Cl, halogeniertes Alkyl, halogeniertes Alkenyl, halogeniertes Oxalkyl, halogeniertes Alkenyloxy oder halogeniertes Alkoxy mit bis zu 6 C-Atomen,
- Z⁰: -C₂F₄-, -CF=CF-, -C₂H₄-, -(CH₂)₄-, -OCH₂-, -CH₂O-, -CF₂O- oder -OCF₂-,
- Y¹ bis Y⁴: jeweils unabhängig voneinander H oder F,
- r: 0 oder 1, und
- t: 0, 1 oder 2.

Die Verbindungen der Formel IV sind vorzugsweise eine Verbindung der Formeln IVa bis IVe: 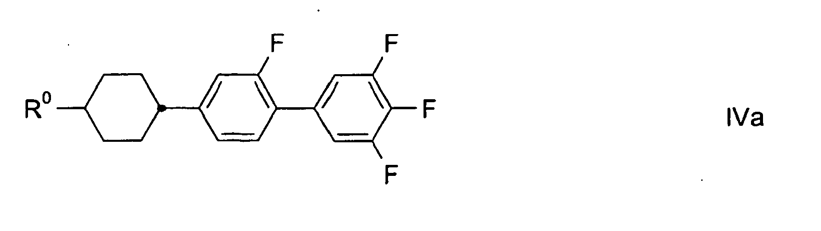 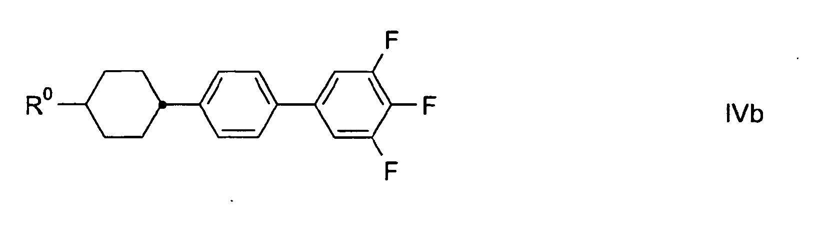 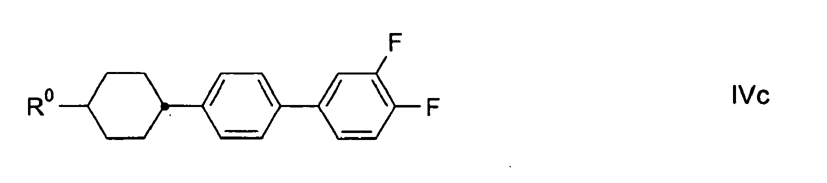 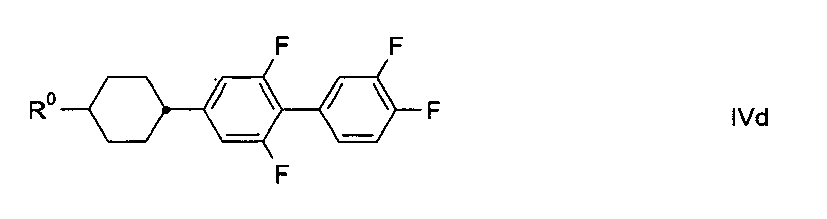 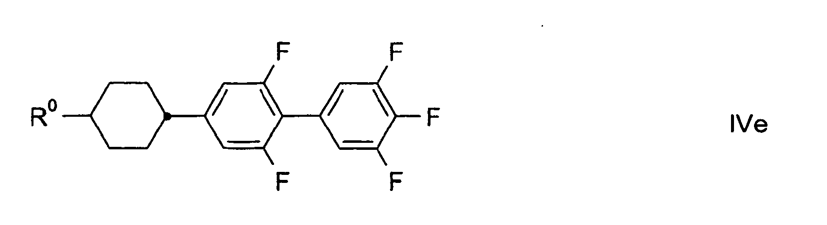
- Das Medium enthält zusätzlich eine oder mehrere Verbindungen ausgewählt aus der Gruppe bestehend aus den allgemeinen Formeln VII bis XIII: 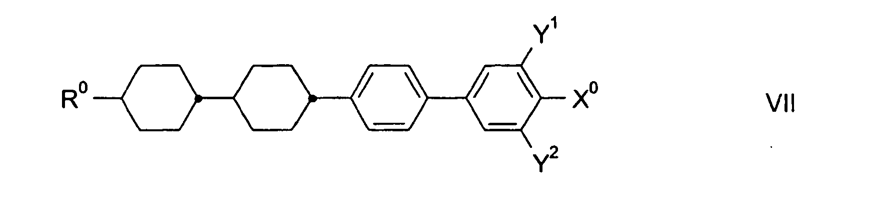 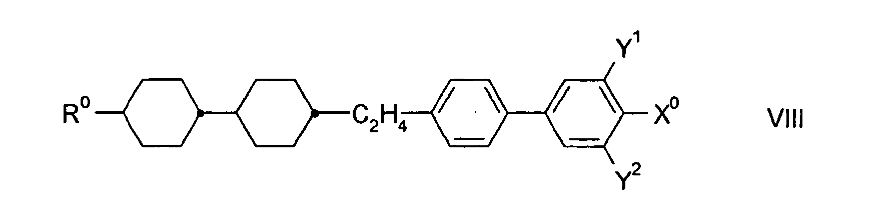 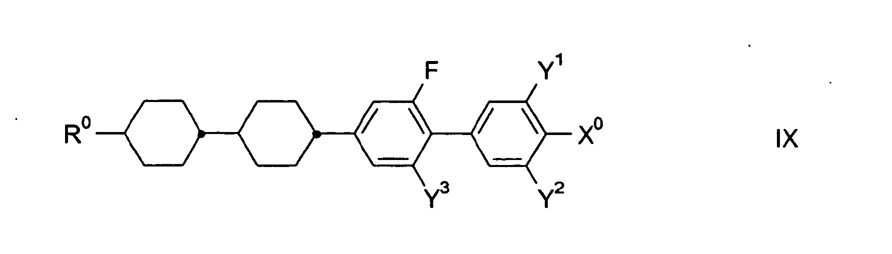 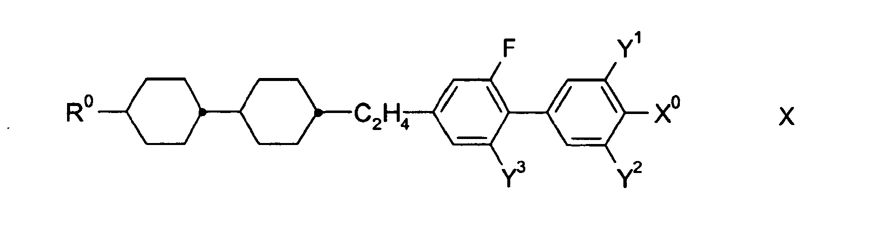 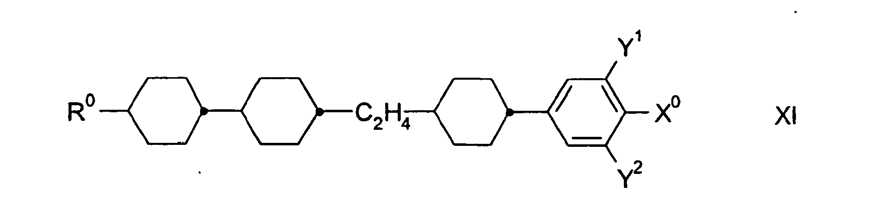 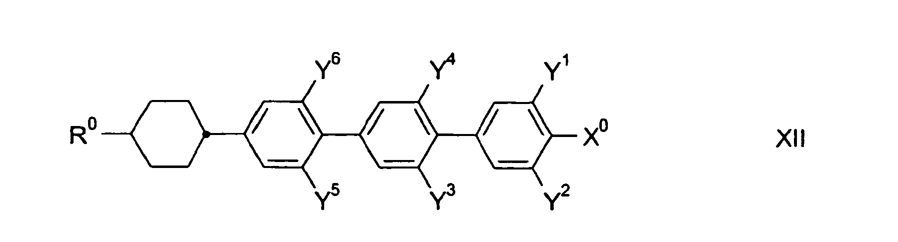 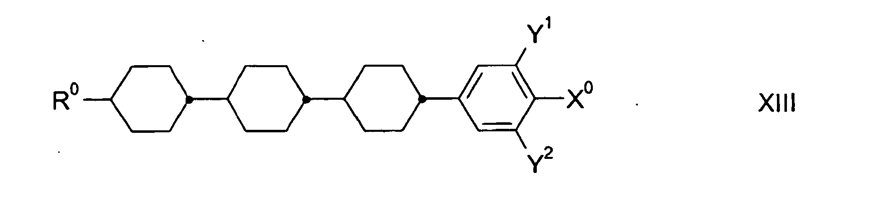
worin
- R⁰: n-Alkyl, Oxaalkyl, Fluoralkyl oder Alkenyl mit jeweils bis zu 9 C-Atomen,
- X⁰: F, Cl, halogeniertes Alkyl, halogeniertes Alkenyl, halogeniertes Alkenyloxy oder halogeniertes Alkoxy mit bis zu 6 C-Atomen, und
- Y¹ bis Y⁶: jeweils unabhängig voneinander H oder F
bedeutet.
X⁰ ist hier vorzugsweise F, Cl, CF₃, OCF₃ oder OCHF₂. R⁰ bedeutet hier vorzugsweise Alkyl, Alkoxy, Oxaalkyl, Fluoralkyl oder Alkenyl mit jeweils bis zu 6 C-Atomen.
- Der Anteil an Verbindungen der Formeln II bis VI im Gesamtgemisch beträgt 0 bis 30 Gew.%.
- In den Formeln II bis XIII bedeutet der Strukturteil 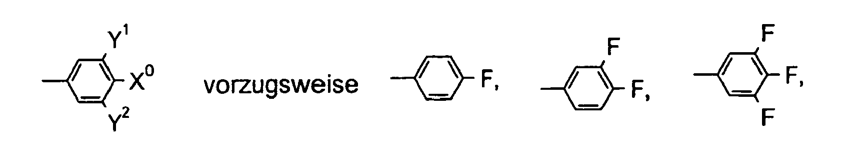 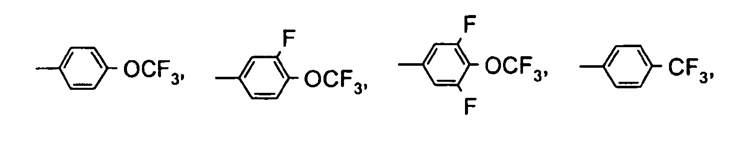 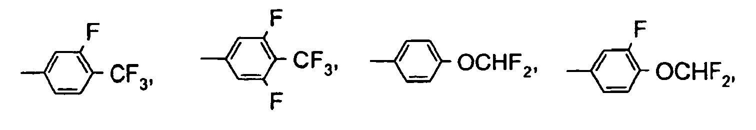 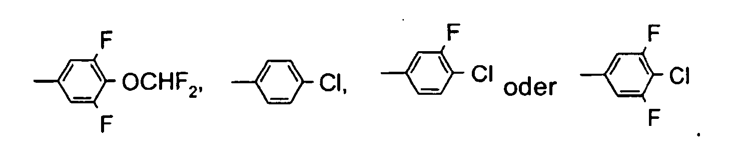
- R⁰ ist in allen Verbindungen bevorzugt geradkettiges Alkyl oder Alkenyl mit 2 bis 7 C-Atomen;
- Das Medium enthält weitere Verbindungen aus der Klasse der fluorierten Terphenyle mit R⁰ und/oder X⁰, wie unten definiert, als *para*-1,4"'-Endgruppen, vorzugsweise ausgewählt aus der folgenden Gruppe bestehend aus Verbindungen der Formeln XIV und XV: 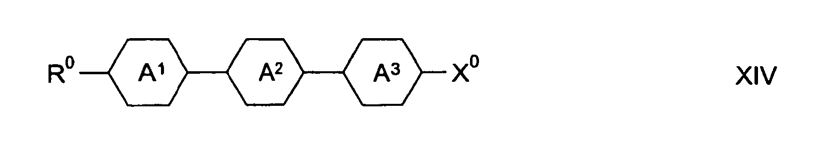 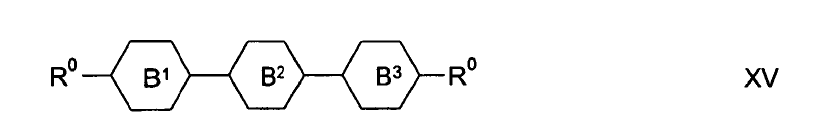
worin unabhängig voneinander
- R⁰: n-Alkyl, Oxaalkyl, Fluoralkyl oder Alkenyl mit jeweils bis zu 9 C-Atomen,
- X⁰: F, Cl, halogeniertes Alkyl, halogeniertes Alkenyl, halogeniertes Alkenyloxy oder halogeniertes Alkoxy mit bis zu 6 C-Atomen, bevorzugt F, Cl, OCF₃ oder CF₃ und die
- Ringe A¹, A², A³, B¹, B² und B³,: unabhängig voneinander, ein 1,4-Phenylen, das mit 0, 1, oder 2 Fluor substituiert ist,
bedeutet.

Vorzugsweise ist in Formel XIV und XV je mindestens einer der 1,4-Phenylenringe ein- oder mehrfach durch Fluoratome substituiert. Bevorzugt sind in Verbindungen der Formel XIV zwei der Phenylringe durch je mindestens ein Fluoratom substituiert oder einer der Phenylringe durch 2 Fluoratome substituiert; in Verbindungen der Formel XV ist bevorzugt einer der Phenylringe durch mindestens ein Fluoratom substituiert. X⁰ ist in den Formeln XIV und XV vorzugsweise F, Cl, CF₃, OCF₃ oder OCHF₂. R⁰ bedeutet hier vorzugsweise Alkyl, Alkoxy, Oxaalkyl, Fluoralkyl oder Alkenyl mit jeweils bis zu 6 C-Atomen.

Besonders bevorzugt handelt es sich bei den Verbindungen der Formel XIV um Verbindungen der Formeln XIV-1 bis XIV-5: 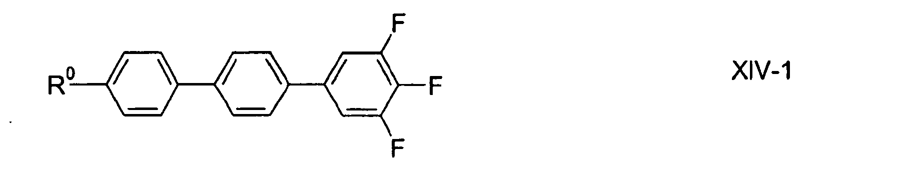 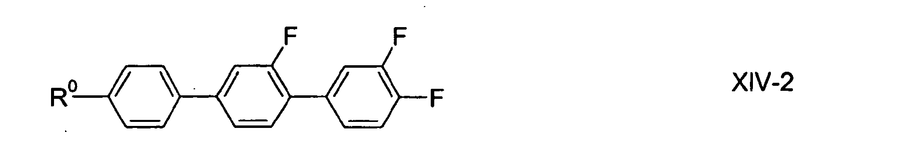 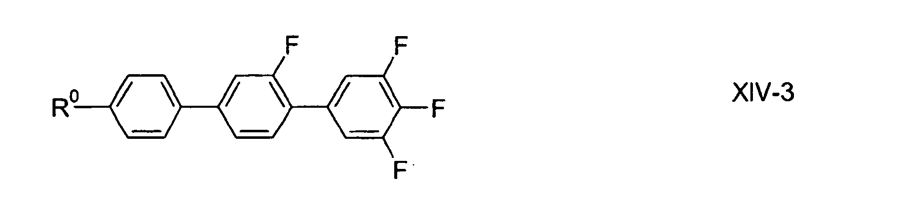 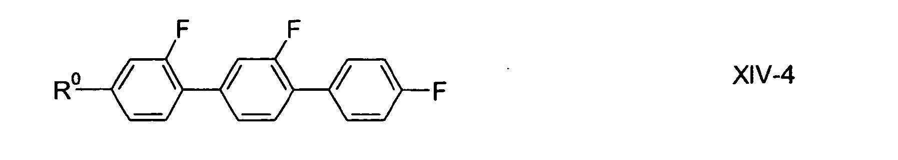 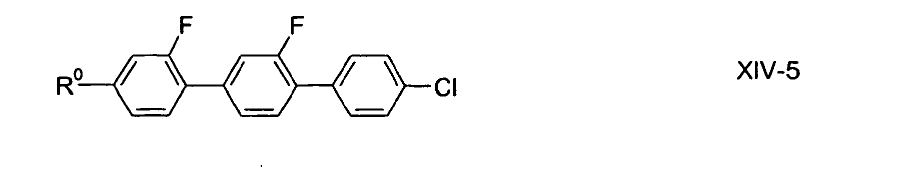 worin R⁰ jeweils unabhängig voneinander wie für die Formel XIV definiert ist.
- Der Anteil der Verbindungen der Formeln XIV und XV ist vorzugsweise 0-40 Gew.%, insbesondere 2-35 Gew.%;

Besonders bevorzugt handelt es sich bei den Verbindungen der Formel XV um eine Verbindung der Formeln XV-1 bis XV-3: 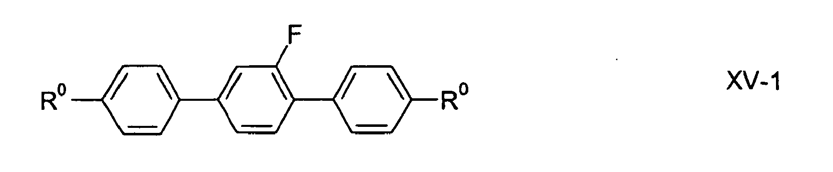 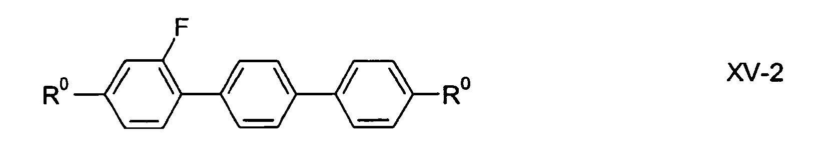 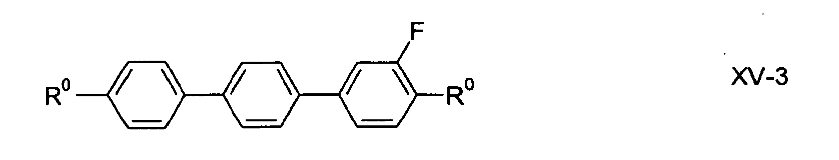 worin R⁰ wie für die Formel XV definiert ist.
- Das Medium enthält eine oder mehrere Verbindungen ausgewählt aus der folgenden Gruppe bestehend aus den allgemeinen Formeln XVI bis XVIII: 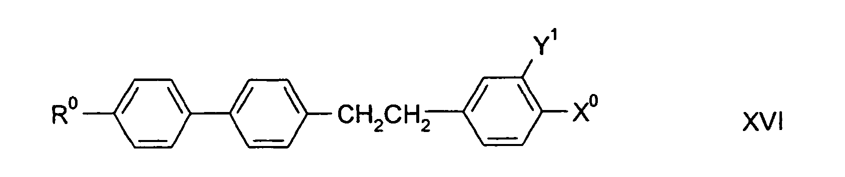 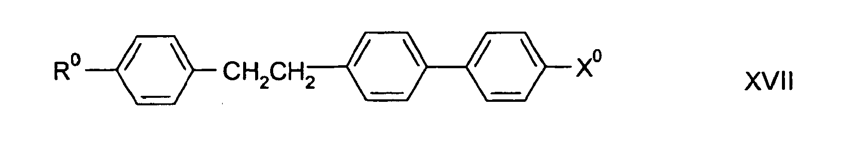 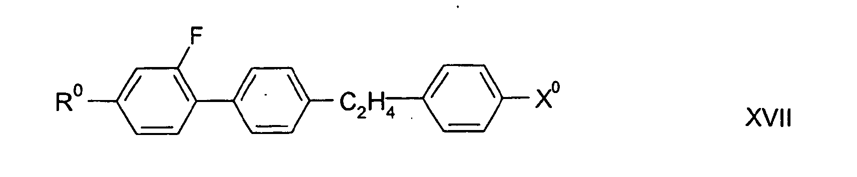
worin
- R⁰: n-Alkyl, Oxaalkyl, Fluoralkyl oder Alkenyl mit jeweils bis zu 9 C-Atomen,
- Y¹: H oder F, und
- X⁰: F, Cl, halogeniertes Alkyl, halogeniertes Alkenyl, halogeniertes Alkenyloxy oder halogeniertes Alkoxy mit bis zu 6 C-Atomen
bedeutet; die 1,4-Phenylenringe können zusätzlich durch CN, Chlor oder Fluor substituiert sein. Vorzugsweise sind die 1,4-Phenylenringe ein- oder mehrfach durch Fluoratome substituiert.
- Das Medium enthält vorzugsweise eine oder mehrere Verbindungen der Formeln IIa bis IIg, 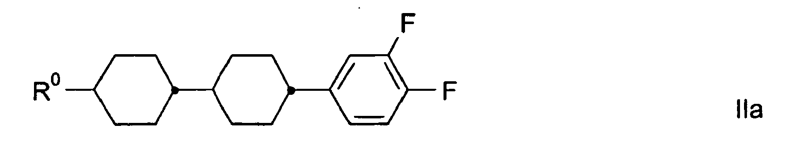 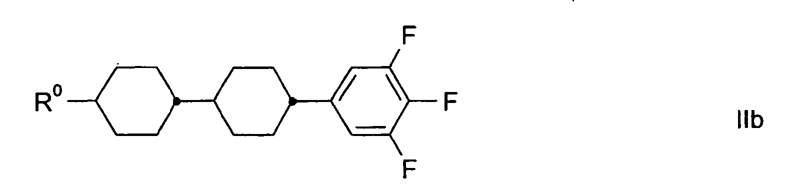 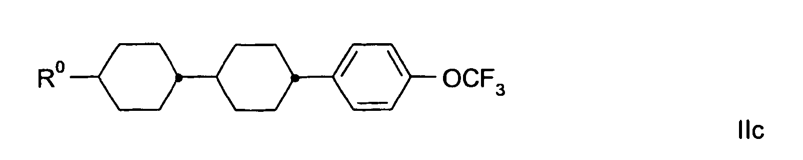 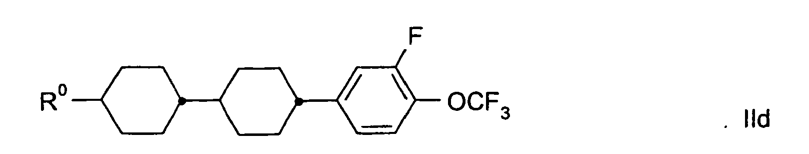 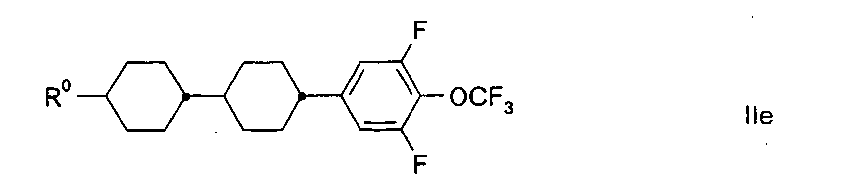 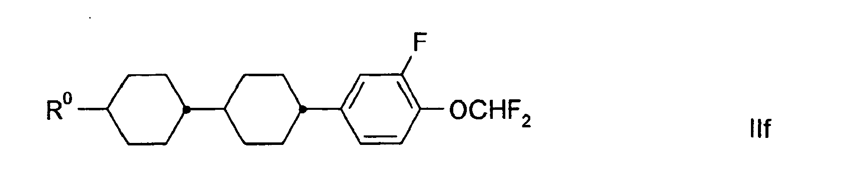 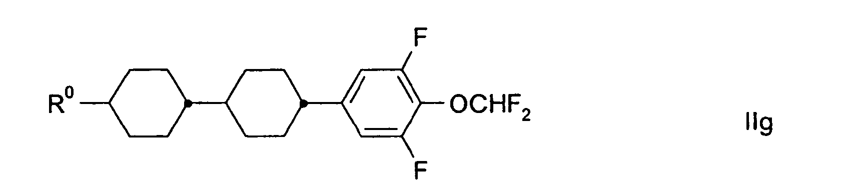
worin
- R⁰: n-Alkyl, Oxaalkyl, Fluoralkyl oder Alkenyl mit jeweils bis zu 9 C-Atomen
bedeutet.
In den Verbindungen der Formeln lla-llg bedeutet R⁰ vorzugsweise Methyl, Ethyl, n-Propyl, n-Butyl und n-Pentyl.
- Das Medium enthält vorzugsweise ein, zwei oder mehr, vorzugsweise ein oder zwei, Dioxan-Verbindungen der Formeln D-1 und/oder D-2: 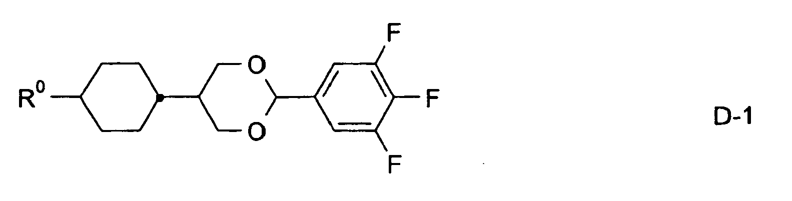 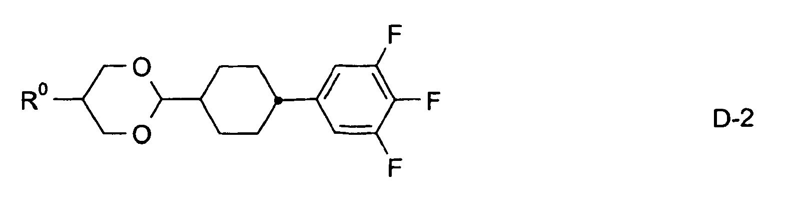
worin
- R⁰: n-Alkyl, Oxaalkyl, Fluoralkyl oder Alkenyl mit jeweils bis zu 9 C-Atomen
bedeutet.

Der Anteil der Dioxan-Verbindungen D-1 und/oder D-2 in den erfindungsgemäßen Mischungen beträgt vorzugsweise 0-25 Gew.%, insbesondere 0-20 Gew.% und ganz besonders bevorzugt 0-15 Gew.%.
- Das Medium enthält vorzugsweise ein, zwei oder mehr, vorzugsweise ein oder zwei Pyranverbindungen der Formeln P-1 bis P-4, 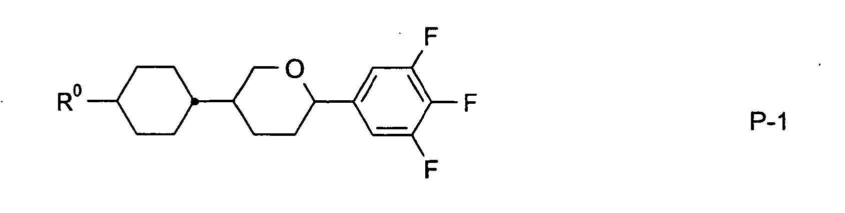 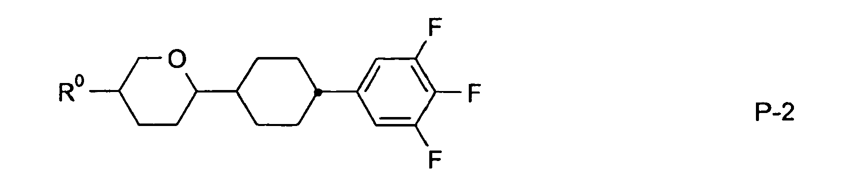 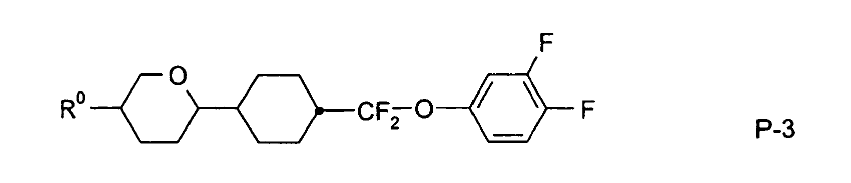 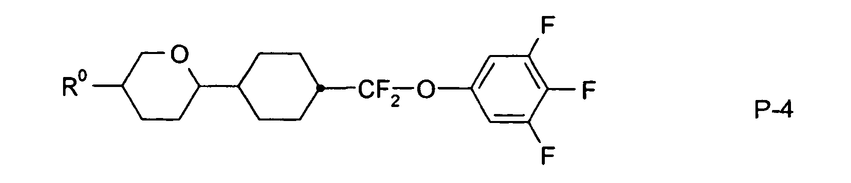
worin
- R⁰: n-Alkyl, Oxaalkyl, Fluoralkyl oder Alkenyl mit jeweils bis zu 9 C-Atomen
bedeutet.
- Das Medium besteht im wesentlichen aus Verbindungen ausgewählt aus der Gruppe bestehend aus den allgemeinen Formeln I, K-1 bis K-11, XIV, XV und aus Z-1 bis Z-11.

Das Medium enthält zusätzlich eine oder mehrere UV-stabilisierende Verbindungen, insbesondere eine Quaterphenylverbindung. Besonders bevorzugt sind einfach oder mehrfach fluorierte Quaterphenylverbindungen der Formel 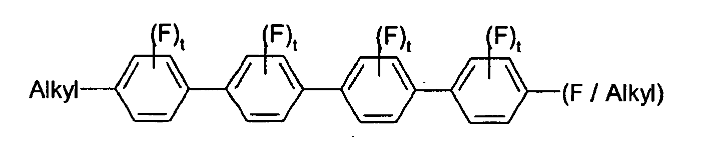 wobei t jeweils unabhängig 0, 1 oder 2 ist,
und ganz besonders der Formel 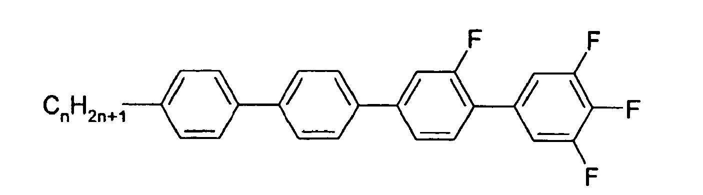 wobei n 1 bis 8 ist.
- Die erfindungsgemäßen Mischungen zeichnen sich bevorzugt dadurch aus, dass sie Klärpunkte von 70 °C oder mehr, insbesondere bevorzugt von 75 °C oder mehr und Schwellenspannungen von 2,0V oder weniger und insbesondere von 1,5 V oder weniger und ganz besonders von 1,2 V oder weniger aufweisen.
- Die erfindungsgemäßen Mischungen zeichnen sich insbesondere dadurch aus, dass sie eine dielektrische Anisotropie Δε von 3 oder mehr und bevorzugt von 4 oder mehr aufweisen. In einer besonders bevrzugten Ausführungsforme beträgt die dielektrische Anisotropie 8 oder mehr und bevorzugt 11 oder mehr.

Es wurde gefunden, dass bereits ein relativ geringer Anteil an Verbindungen der Formeln I im Gemisch mit üblichen Flüssigkristallmaterialien, insbesondere jedoch mit einer oder mehreren Verbindungen der Formeln K, Z, II, XIV und/oder XV zu einer beträchtlichen Erniedrigung der Rotationsviskositäten und der Schaltzeiten führt, wobei gleichzeitig breite nematische Phasen mit tiefen Übergangstemperaturen smektisch-nematisch beobachtet werden, wodurch die Lagerstabilität verbessert wird.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-5 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele besonders bevorzugter Alkenylgruppen sind Vinyl, 1E-Propenyl, 1 E-Butenyl, 1 E-Pentenyl, 1E-Hexenyl,1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst vorzugsweise geradkettige Reste der Formel CₙH₂ₙ₊₁-O-(CH₂)_{m,} worin n und m jeweils unabhängig voneinander 1 bis 6 bedeuten. m kann auch 0 bedeuten. Vorzugsweise ist n = 1 und m 1-6 oder m = 0 und n = 1-3.

Durch geeignete Wahl der Bedeutungen von R⁰ und X⁰ können die Ansprechzeiten, die Schwellenspannung, die Steilheit der Transmissionskennlinie etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I + K und Z + II + XIV + XV sowie D bzw. P hängt weitgehend von den gewünschten Eigenschaften, von der Wahl der Komponenten und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln 1, K und der angegebenen Cokomponenten in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Rotationsviskosität und den Klärpunkt ist jedoch in der Regel umso größer je höher die Gesamtkonzentration an Verbindungen der Formeln I und der angegebenen Cokomponenten sind.

Die einzelnen Verbindungen, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Stabilisatoren wie Tinuvin^{®} der Fa. Ciba Specialitiy Chemicals, Antioxidantien, Radikalfänger, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

C bedeutet eine kristalline, S eine smektische, S_{c} eine smektisch C, N eine nematische und I die isotrope Phase.

Die Schwellenspannung V₁₀ bezeichnet die Spannung für 10 % Transmission (Blickrichtung senkrecht zur Plattenoberfläche). Δn bezeichnet die optische Anisotropie. Δε bezeichnet die dielektrische Anisotropie (Δε = ε∥ - ε_{⊥}, wobei ε_{∥} die Dielektrizitätskonstante parallel zu den Moleküllängsachsen und ε_{┴} die Dielektrizitätskonstante senkrecht dazu bedeutet). Die elektro-optischen Daten werden in einer TN-Zelle mit 90° Verdrillung im 1. Minimum (d.h. bei einem d · Δn-Wert von 0,5 µm) bei 20°C gemessen, sofern nicht ausdrücklich etwas anderes angegeben wird. Die optischen Daten werden bei 20 °C gemessen, sofern nicht ausdrücklich etwas anderes angegeben wird.
In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt vom Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| n0m | CₙH₂ₙ₊₁ | OCₘH₂ₘ₊₁ | H | H |
| n0.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nCl | CₙH₂ₙ₊₁ | Cl | H | H |
| nCl.F | CₙH₂ₙ₊₁ | Cl | F | H |
| nCl.F.F | CₙH₂ₙ₊₁ | Cl | F | F |
| n0F | OCₙH₂ₙ₊₁ | F | H | H |
| nF | CₙH₂ₙ₊₁ | F | H | H |
| nF.F | CₙH₂ₙ₊₁ | F | F | H |
| nF.F.F | CₙH₂ₙ₊₁ | F | F | F |
| nmF | CₙH₂ₙ₊₁ | CₘH₂ₘ₊₁ | F H | |
| n0CF3 | CₙH₂ₙ₊₁ | OCF₃ | H | H |
| n0CF3.F | CₙH₂ₙ₊₁ | OCF₃ | F | H |
| n0CF3.F.F | CₙH₂ₙ₊₁ | OCF₃ | F | F |
| nCF3 | CₙH₂ₙ₊₁ | CF₃ | H | H |
| nCF3.F | CₙH₂ₙ₊₁ | CF₃ | F | H |
| nCF3.F.F | CₙH₂ₙ₊₁ | CF₃ | F | F |
| n0CF2 | CₙH₂ₙ₊₁ | OCHF₂ | H | H |
| n0CF2.F | CₙH₂ₙ₊₁ | OCHF₂ | F | H |
| n0CF2.F.F | CₙH₂ₙ₊₁ | OCHF₂ | F | F |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| |
|---|
| 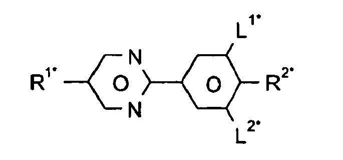 |
| **PYP** |
| 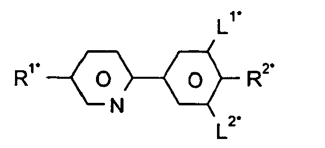 |
| **PYRP** |
| 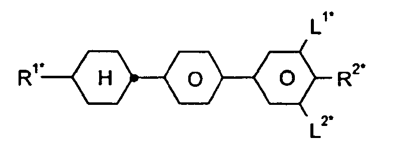 |
| **BCH** |
| 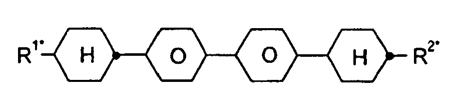 |
| **CBC** |
| 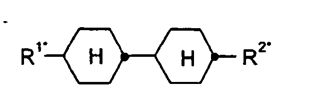 |
| **CCH** |
| 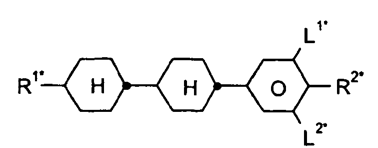 |
| **CCP** |
| 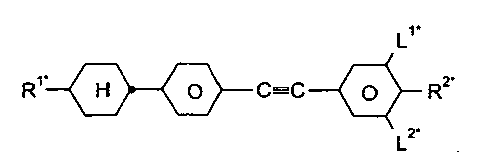 |
| **CPTP** |
| 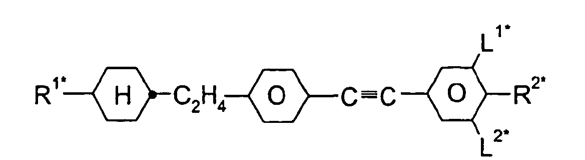 |
| **CEPTP** |
| 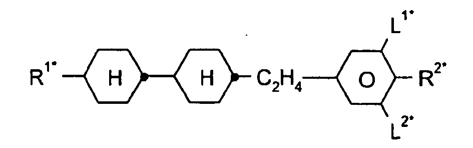 |
| **ECCP** |
| 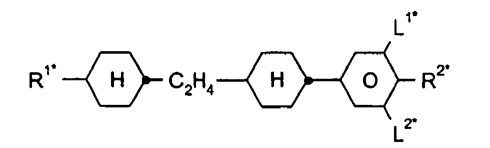 |
| **CECP** |
| 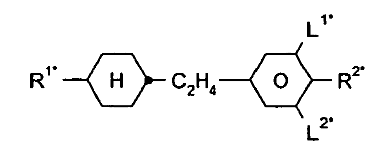 |
| **EPCH** |
| 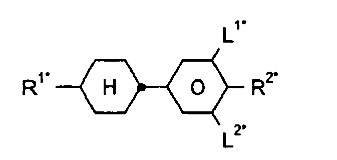 |
| **PCH** |
| 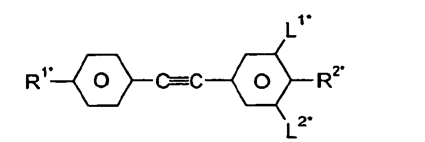 |
| **PTP** |
| 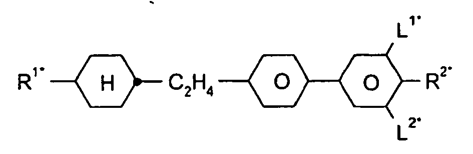 |
| **BECH** |
| 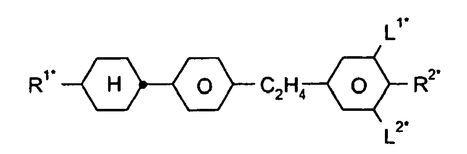 |
| **EBCH** |
| 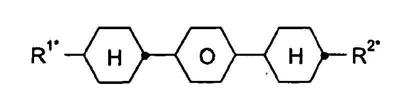 |
| **CPC** |
| 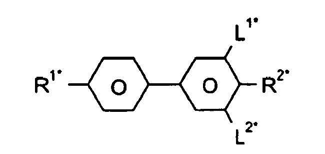 |
| **B** |
| 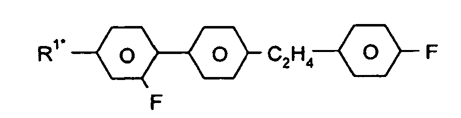 |
| **FET-nF** |
| 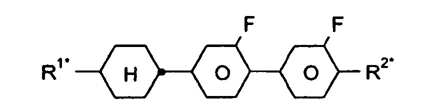 |
| **CGG** |
| 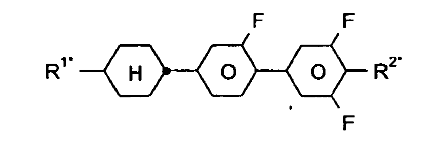 |
| **CGU** |
| 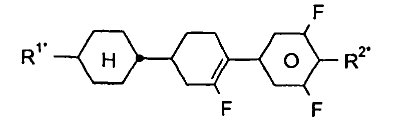 |
| **CFU** |

**Tabelle B**

| |
|---|
| 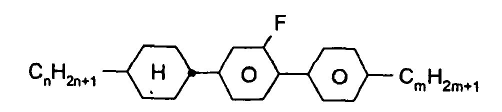 |
| **BCH-n.Fm** |
| 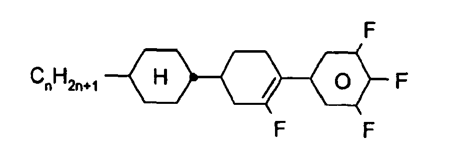 |
| **CFU-n-F** |
| 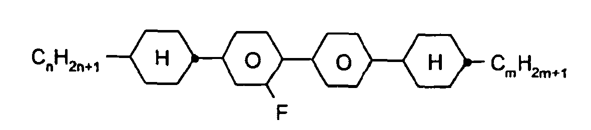 |
| **CBC-nmF** |
| 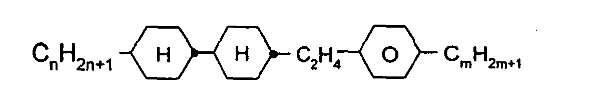 |
| **ECCP-nm** |
| 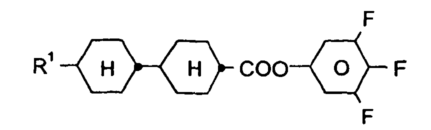 |
| **CCZU-n-F** |
| 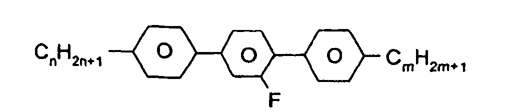 |
| **PGP-n-m** |
| 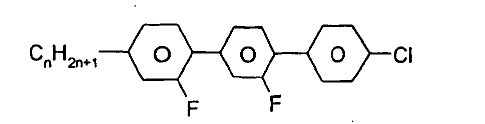 |
| **GGP-n-Cl** |
| 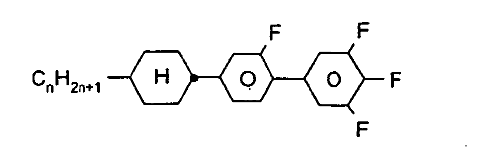 |
| **CGU-n-F** |
| 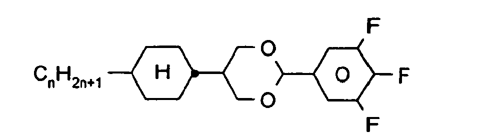 |
| **CDU-n-F** |
| 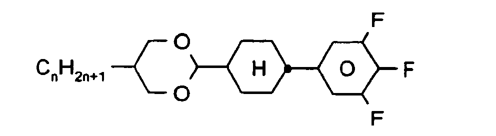 |
| **DCU-n-F** |
| 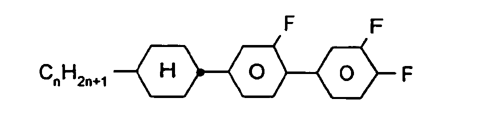 |
| **CGG-n-F** |
| 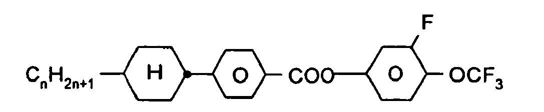 |
| **CPZG-n-OT** |
| 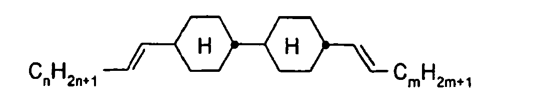 |
| **CC-nV-Vm** |
| 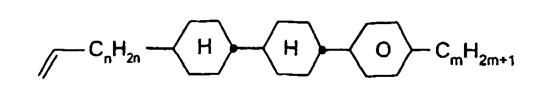 |
| **CCP-Vn-m** |
| 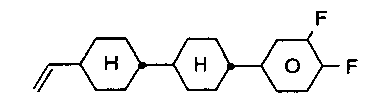 |
| **CCG-V-F** |
| 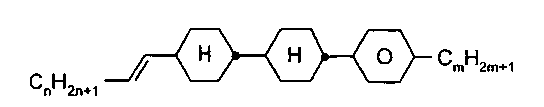 |
| **CCP-nV-m** |
| 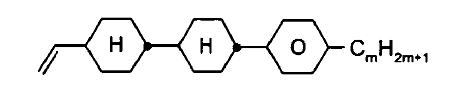 |
| **CCP-V-m** |
| 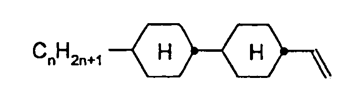 |
| **CC-n-V** |
| 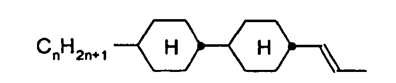 |
| **CC-n-V1** |
| 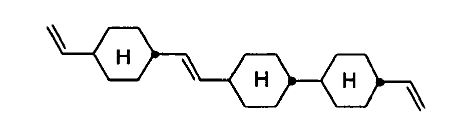 |
| **CCVC-V-V** |
| 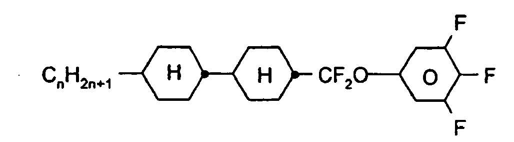 |
| **CCQU-n-F** |
| 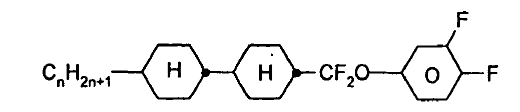 |
| **CCQG-n-F** |
| 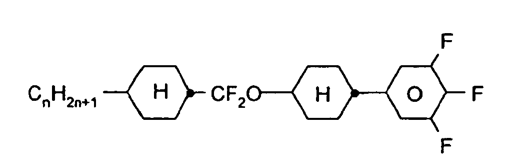 |
| **CQCU-n-F** |
| 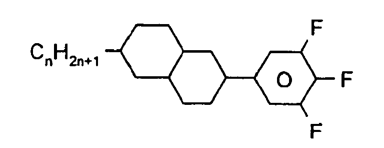 |
| **Dec-U-n-F** |
| 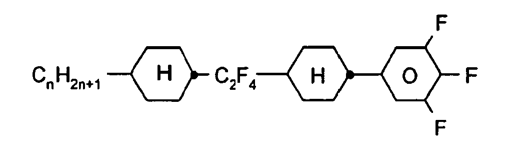 |
| **CWCU-n-F** |
| 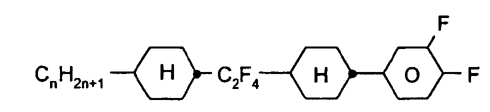 |
| **CWCG-n-F** |
| 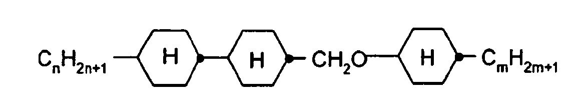 |
| **CCOC-n-m** |
| 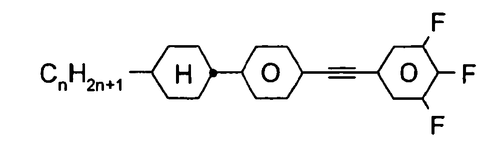 |
| **CPTU-n-F** |
| 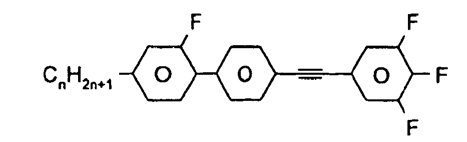 |
| **GPTU-n-F** |
| 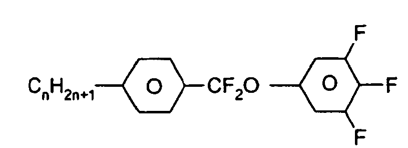 |
| **PQU-n-F** |
| 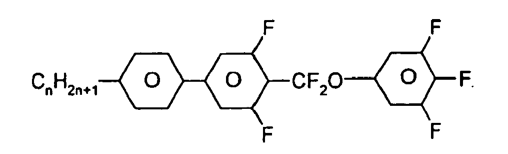 |
| **PUQU-n-F** |
| 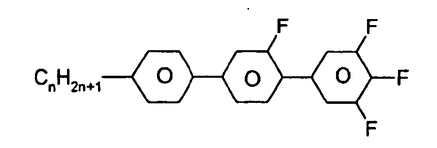 |
| **PGU-n-F** |
| 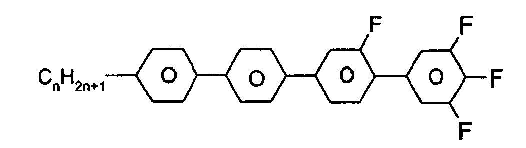 |
| **PPGU-n-F** |
| 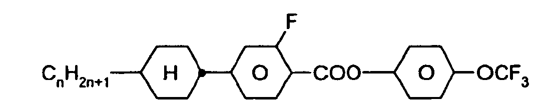 |
| **CGZP-n-OT** |
| 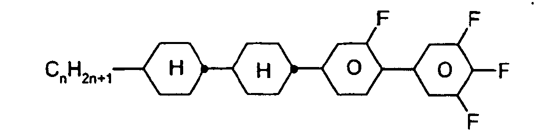 |
| **CCGU-n-F** |
| 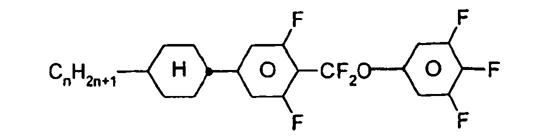 |
| **CUQU-n-F** |
| 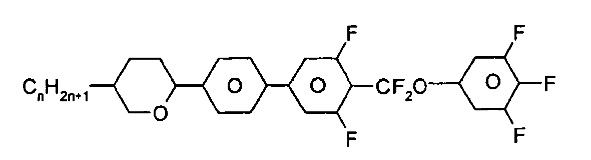 |
| **APUQU-n-F** |
| 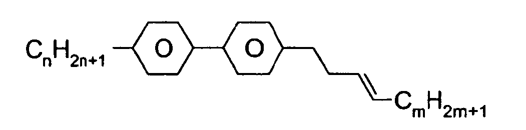 |
| **PP-n-2Vm** |

Besonders bevorzugt sind flüssigkristalline Mischungen, die neben den Verbindungen der Formeln I mindestens ein, zwei, drei oder vier Verbindungen aus der Tabelle B enthalten.

**Tabelle C**

| |
|---|
| In der Tabelle C werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. |
| 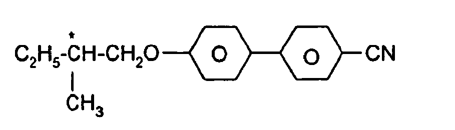 |
| **C 15** |
| 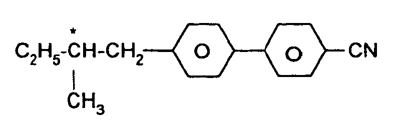 |
| **CB 15** |
| 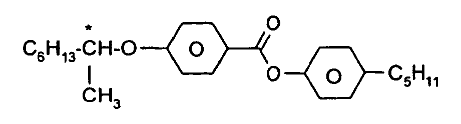 |
| **CM 21** |
| 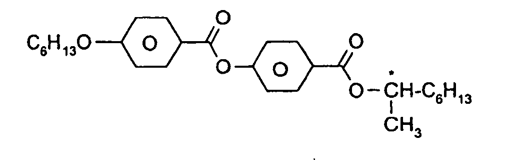 |
| **R/S-811** |
| 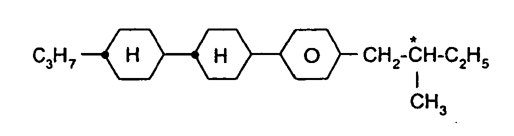 |
| **CM 44** |
| 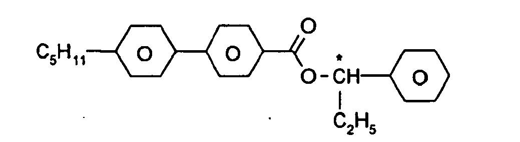 |
| **CM 45** |
| 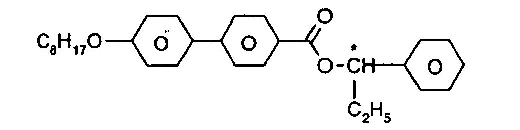 |
| **CM 47** |
| 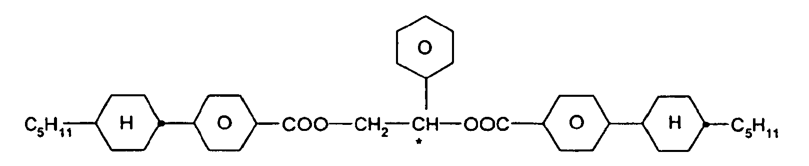 |
| **R/S-1011** |
| 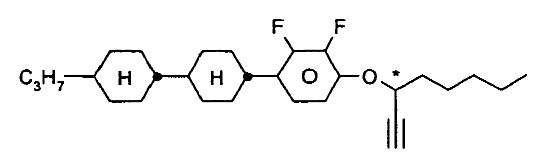 |
| **R/S-3011** |
| 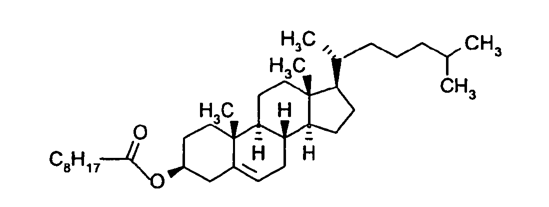 |
| **CN** |
| 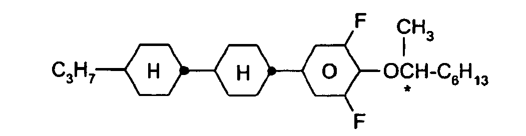 |
| **R/S-2011** |
| 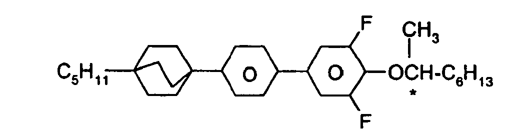 |
| **R/S-4011** |
| 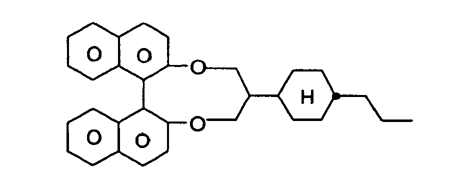 |
| **R/S-5011** |

**Tabelle D**

| | |
|---|---|
| Stabilisatoren, die beispielsweise den erfindungsgemäßen Mischungen zugesetzt werden können, werden nachfolgend genannt. | |
| 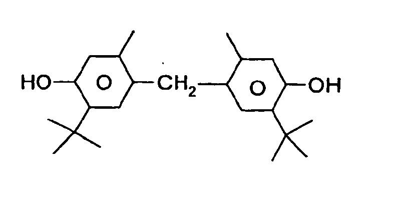 | 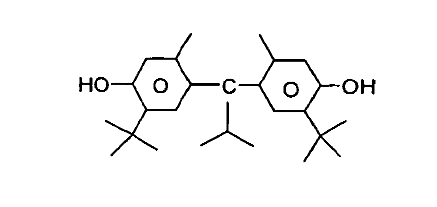 |
| 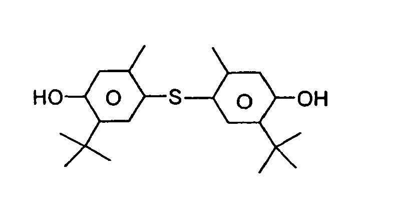 | 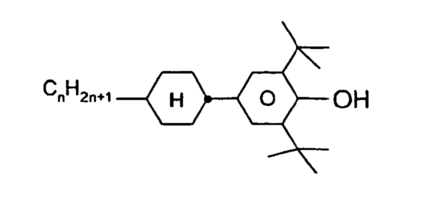 |
| 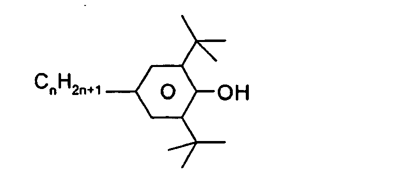 | 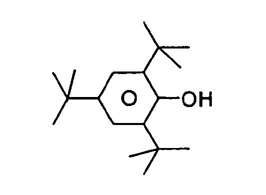 |
| 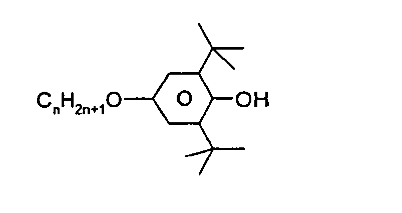 | 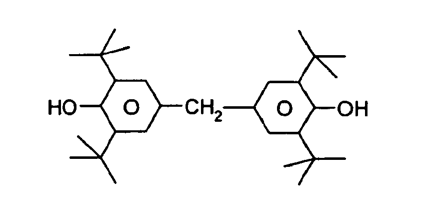 |
| 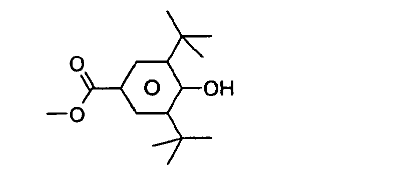 | 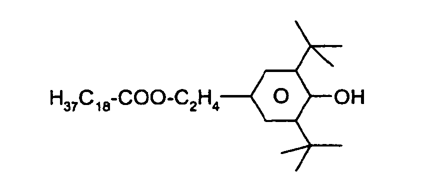 |
| 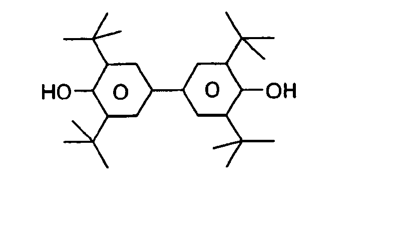 | |
| 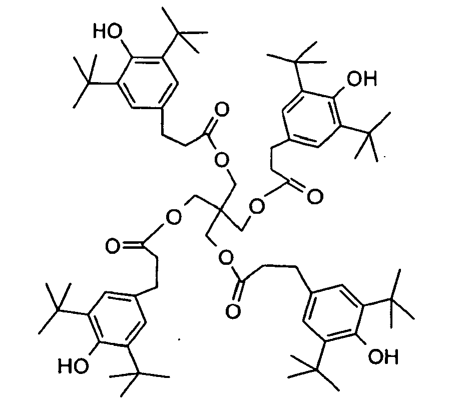 | |
| 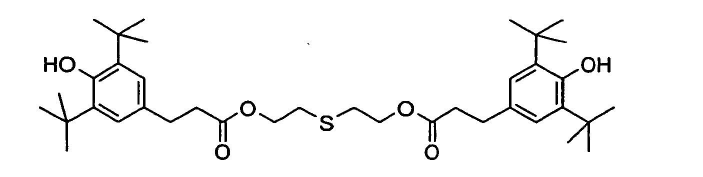 | |
| 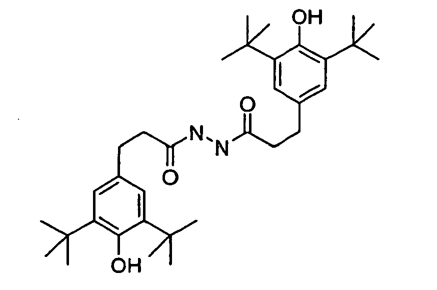 | |
| 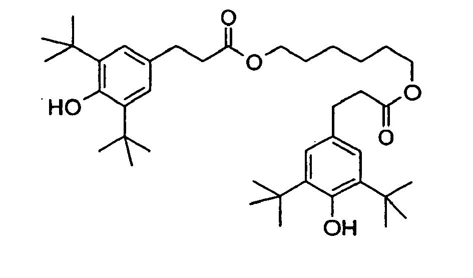 | |
| 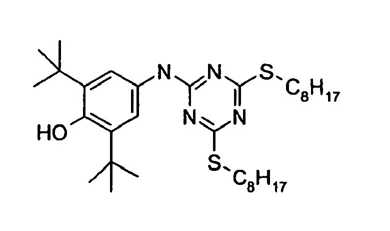 | 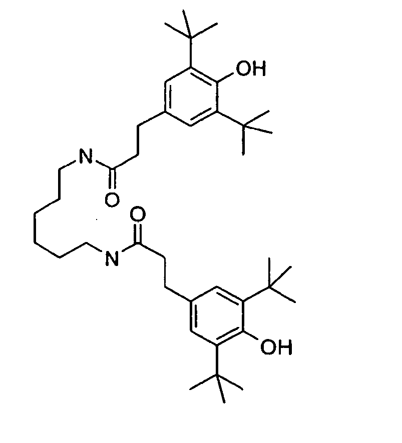 |
| 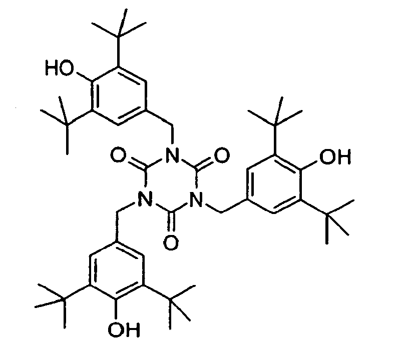 | 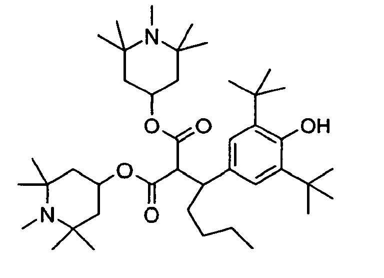 |
| 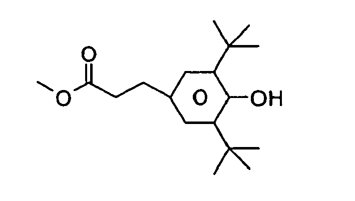 | 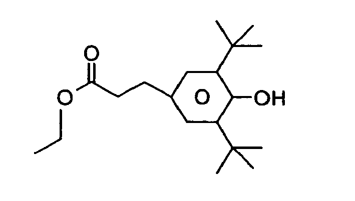 |
| 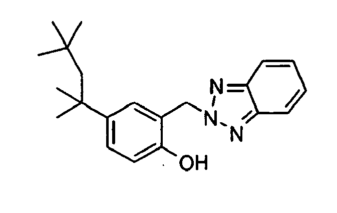 | 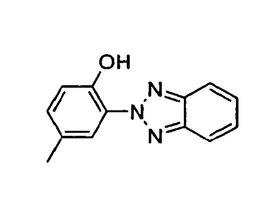 |
| 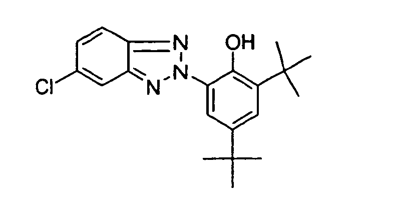 | 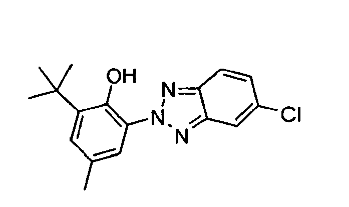 |
| 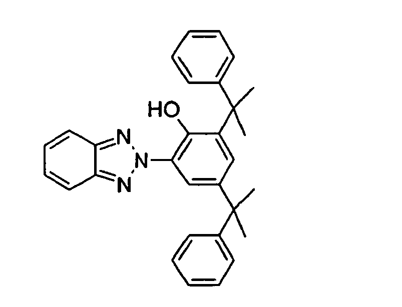 | 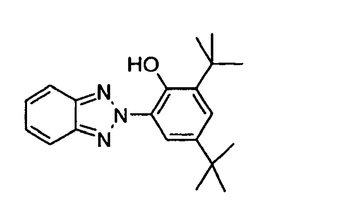 |
| 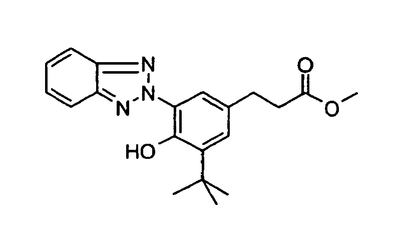 | 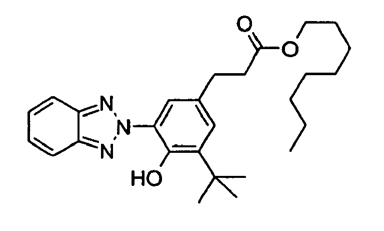 |
| 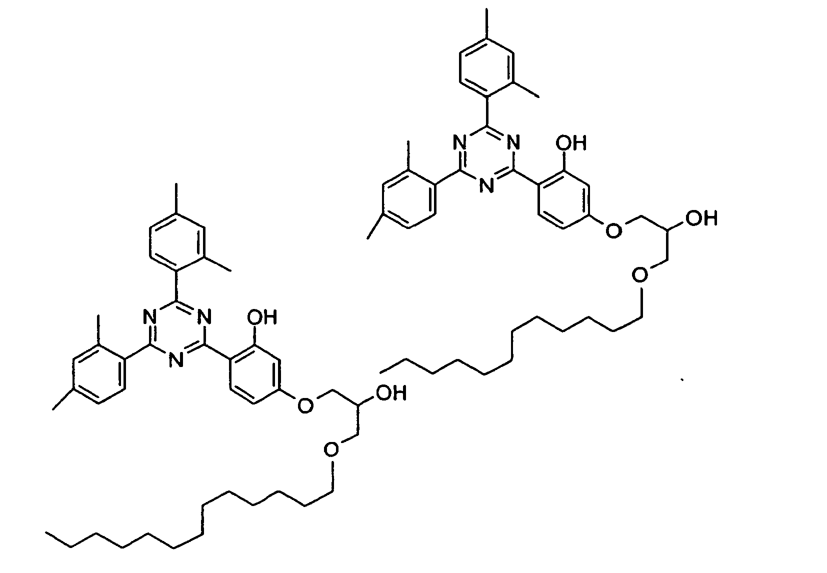 | |
| 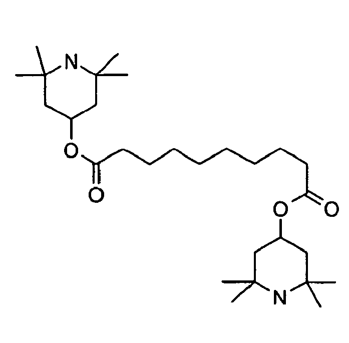 | 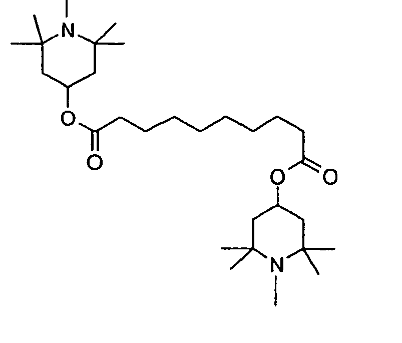 |

Die folgenden Beispiele erläutern die Erfindung, ohne sie einschränken zu sollen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1 kHz, 20 °C). Die Fließviskosität ν₂₀ (mm²/sec) und die Rotationsviskosität γ₁ (mPa·s) wurden jeweils bei 20 °C bestimmt.
Die physikalischen Meßmethoden sind in beschrieben in "Merck Liquid Crystals, Physical Eigenschaften of Liquid Crystals", Nov. 1997, Merck KGaA.

### Mischungsbeispiel 1

| Zusammensetzung: | | Eigenschaften: | |
|---|---|---|---|
| CCP-20CF3 | 3,0 % | Klärpunkt / °C: | 73,0 |
| CCP-30CF3 | 4,0 % | nₑ [589 nm, 20 °C]: | 1,5979 |
| PGU-2-F | 2,0 % | Δn [589 nm, 20 °C]: | 0,1069 |
| PGU-3-F | 9,0 % | ε_{∥} [1 kHz, 20 °C]: | 7,4 |
| PUQU-3-F | 8,0 % | Δε [1 kHz, 20 °C]: | +4,4 |
| CC-3-V1 | 13,0 % | γ₁ / mPa·s [20 °C]: | 57 |
| CC-3-V | 18,0 % | k₁₁ / pN [20 °C]: | 12,8 |
| PCH-301 | 11,0 % | K 33 / pN [20 °C]: | 13,4 |
| CCP-V-1 | 12,0 % | TN, 90° (d·Δn = 0,50 µm) | |
| CCGU-3-F | 2,0 % | V₁₀ / V [20 °C]: | 1,98 |
| PP-1-2V1 | 10,0 % | V₉₀/V₁₀ [20 °C]: | 1,50 |
| CCVC-V-V | 8.0 % | | |
| E | 100,0 % | | |

### Mischungsbeispiel 2

| Zusammensetzung: | | Eigenschaften: | |
|---|---|---|---|
| CCP-20CF3 | 3,0% | Klärpunkt / °C: | 73,0 |
| CCP-30CF3 | 4,0 % 4,0% | nₑ [589 nm, 20°C]: | 1,5977 |
| PGU-2-F | 2,0% | Δn [589 nm, 20°C]: | 0,1071 |
| PGU-3-F | 9,0 % | ε_{∥} [1 kHz, 20°C]: | 7,3 |
| PUQU-3-F | 8,0 % | Δε [1 kHz, 20 °C]: | +4,4 |
| CC-3-V1 | 13,0% | γ₁ / mPa·s [20 °C]: | 55 |
| CC-3-V | 18,0 % | k₁₁ / pN [20 °C]: | 12,7 |
| PCH-301 | 11,0 % | k₃₃ / pN [20°C]: | 13,4 |
| CCP-V-1 | 10,0 % | TN, 90° (d·An = 0,50 µm) | |
| CCGU-3-F | 2,0 % | V₁₀ / V [20°C]: | 1,97 |
| PP-1-2V1 | 10,0 % | V₉₀/V₁₀ [20 °C]: | 1,50 |
| CCVC-V-V | 10,0 % | | |
| ∑ | 100,0 % | | |

### Mischungsbeispiel 3

| Zusammensetzung : | | Eigenschaften : | |
|---|---|---|---|
| GGP-3-CL | 7,0 % | Klärpunkt / °C: | 76,5 |
| GGP-5-CL | 5,5 % | nₑ [589 nm, 20 °C]: | 1,6213 |
| PGU-2-F | 5,0 % | Δn [589 nm, 20 °C]: | 0,1264 |
| PGU-3-F | 5,0 % | ε_{∥} [1 kHz, 20 °C]: | 7,7 |
| PUQU-2-F | 4,0 % | Δε [1 kHz, 20°C]: | +4,5 |
| PUQU-3-F | 3,0 % | γ₁ / mPa·s [20 °C]: | 59 |
| CCP-V2-1 | 2,0 % | k₁₁ / pN [20°C]: | 12,5 |
| CBC-33 | 2,0 % | k₃₃ / pN [20°C]: | 12,1 |
| CC-3-V1 | 1,0 % | TN, 90° (d·Δn = 0,50 µm) | |
| PGP-2-3 | 6,0 % | V₁₀ / V [20°C]: | 1,86 |
| PGP-2-4 | 6,0 % | V₉₀/V₁₀ [20 °C]: | 1,47 |
| CC-3-V | 44,0 % | | |
| CCVC-V-V | 8,0 % | | |
| PP-1-2V1 | 1,5 % | | |
| ∑ | 100,0 % | | |

### Mischungsbeispiel 4

| Zusammensetzung: | | Eigenschaften: | |
|---|---|---|---|
| CC-3-V | 20,0 % | Klärpunkt / °C: | 78,0 |
| CCG-V-F | 3,0% | nₑ [589 nm, 20 °C]: | 1,5843 |
| CCP-V-1 | 19,0% | Δn [589 nm, 20 °C]: | 0,1000 |
| CCQU-2-F | 7,0% | ε_{∥} [1 kHz, 20 °C]: | 13,6 |
| CCQU-3-F | 12,0% | Δε [1 kHz, 20°C]: | +9,9 |
| PUQU-2-F | 13,0 % | γ₁ / mPa·s [20°C]: | 76 |
| PUQU-3-F | 15,0 % | k₁₁ / pN [20°C]: | 12,2 |
| PGP-2-4 | 4,0 % | k₃₃ / pN [20°C]: | 12,2 |
| CCVC-V-V | 7,0 % | TN, 90° (d·Δn = 0,50 µm) | |
| ∑ | 100,0 % | V₁₀ / V [20 °C]: | 1,27 |
| | | V₉₀/V₁₀ [20 °C]: | 1,54 |

### Mischunqsbeispiel 5

| Zusammensetzung: | | Eigenschaften: | |
|---|---|---|---|
| CDU-2-F | 3,5 % | Klärpunkt / °C: | 74,0 |
| PGU-2-F | 9,0 % | nₑ [589 nm, 20 °C]: | 1,5842 |
| PUQU-2-F | 7,5 % | Δn [589 nm, 20°C]: | 0,0982 |
| PUQU-3-F | 8,0 % | ε_{∥} [1 kHz, 20 °C]: | 12,0 |
| CCP-V-1 | 10,5 % | Δε [1 kHz, 20 °C]: | +8,5 |
| CCP-V2-1 | 9,0 % | γ₁ / mPa·s [20 °C]: | 59 |
| CC-3-V1 | 12,5 % | | |
| CC-3-V | 29,0 % | | |
| APUQU-2-F | 8,0 % | | |
| CCVC-V-V | 3,0 % | | |
| ∑ | 100,0 % | | |

### Mischunqsbeispiel 6

| Zusammensetzung: | | Eigenschaften: | |
|---|---|---|---|
| CCP-30CF3 | 8,0 % | Klärpunkt / °C: | 79,0 |
| PGU-2-F | 9,0 % | nₑ [589 nm, 20°C,: | 1,5975 |
| PGU-3-F | 3,5 % | Δn [589 nm, 20 °C]: | 0,1108 |
| PUQU-2-F | 9,0 % | ε∥ [1 kHz, 20 °C]: | 14,7 |
| PUQU-3-F | 9,5 % | Δε [1 kHz, 20 °C]: | +11,1 |
| CC-3-V1 | 12,0 % | γ₁ / mPa·s [20 °C]: | 74 |
| CC-3-V | 19,0 % | k₁₁ / pN [20 °C]: | 12,4 |
| CCP-V-1 | 11,0 % | k₃₃ / pN [20 °C]: | 13,6 |
| CCP-V2-1 | 7,0 % | IPS | |
| APUQU-2-F | 9,0 % | Vo / V [20 °C]: | 1,11 |
| CCVC-V-V | 3,0 % | | |
| ∑ | 100,0 % | | |

## Patentansprüche

1. Flüssigkristallines Medium mit positiver dielektrischer Anisotropie auf der Basis eines Gemisches von Verbindungen, **dadurch gekennzeichnet, dass** es eine oder mehrere Verbindungen der Formel I 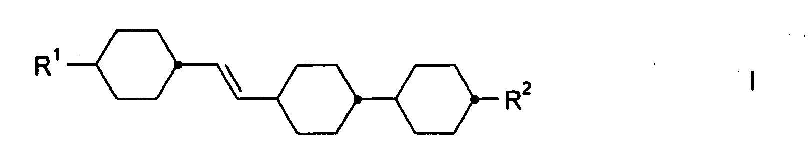 enthält, worin
R¹ und R² , unabhängig voneinander, einen unsubstituierten oder einen mindestens einfach durch Halogen substituierten Alkenylrest mit bis zu 15 C-Atomen,
bedeuten
und zusätzlich eine oder mehrere Verbindungen der allgemeinen Formeln K-1 bis K-11 enthält: 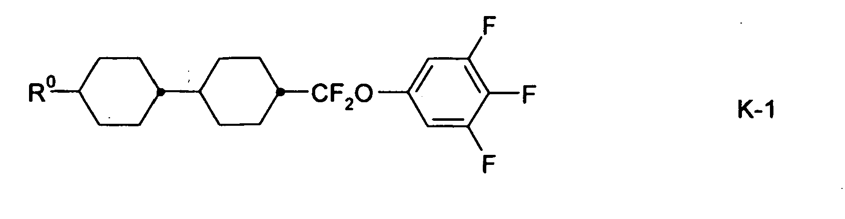 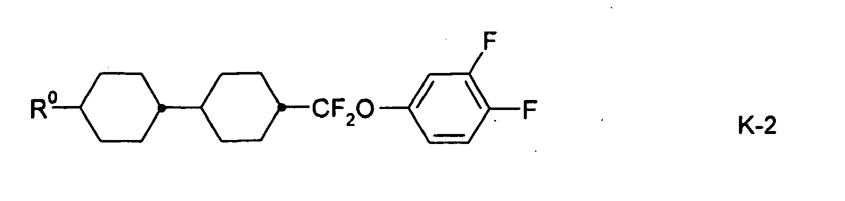 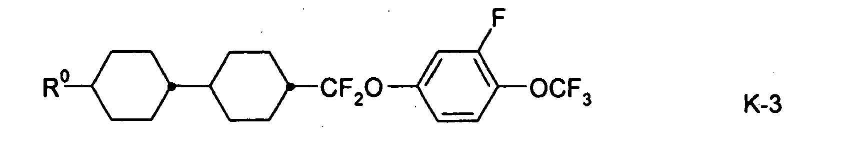 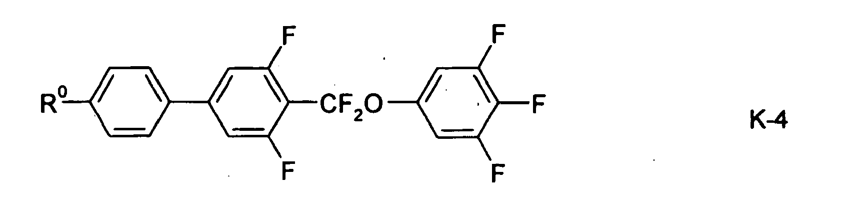 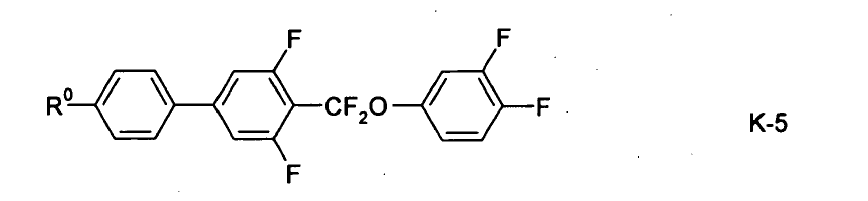 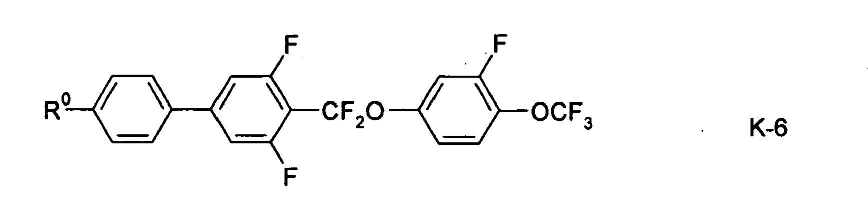 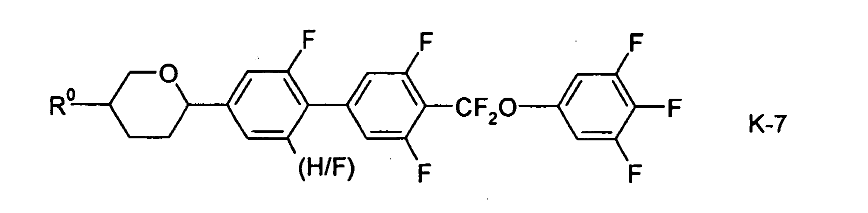 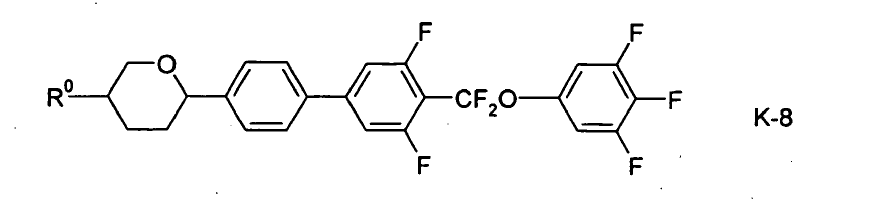 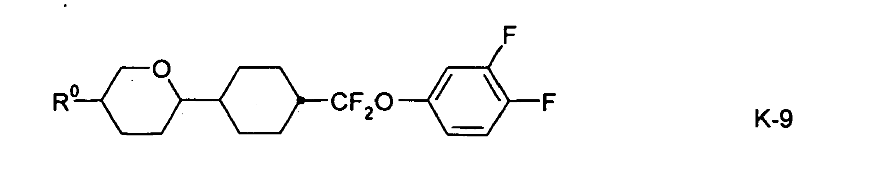 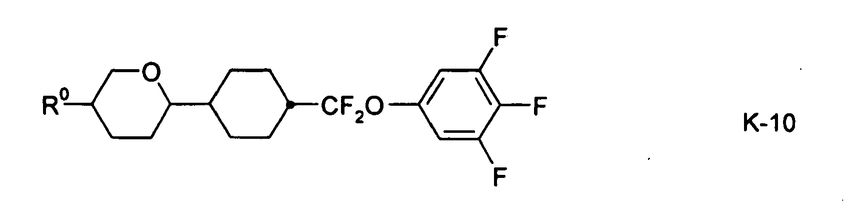 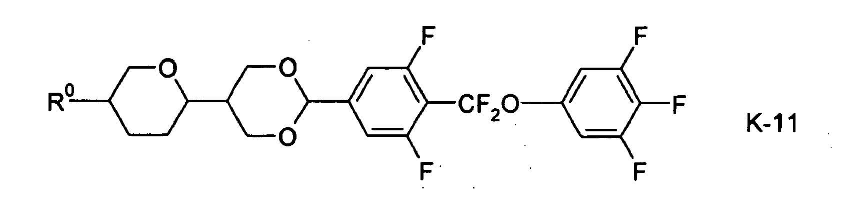 worin
R⁰ n-Alkyl, Oxaalkyl, Fluoralkyl oder Alkenyl mit jeweils bis zu 9 C-Atomen
bedeutet.

2. Flüssigkristallines Medium gemäß Anspruch 1, **dadurch gekennzeichnet, dass** es eine oder mehrere Verbindungen der Formel enthält, worin
R¹ und R² , unabhängig voneinander, einen unsubstituierten Alkenylrest mit bis zu 15 C-Atomen bedeuten.

3. Flüssigkristallines Medium gemäß Anspruch 2, **dadurch gekennzeichnet, dass** es eine oder mehrere Verbindungen der Formel enthält, worin
R¹ und R², unabhängig voneinander, (CH₂)ₙ-CH=CH-(CH₂)ₘH, worin n und m unabhängig voneinander eine ganze Zahl von 0 bis 5 bedeuten.

4. Flüssigkristallines Medium gemäß einem oder mehreren der Ansprüche 1 bis 3, **dadurch gekennzeichnet, dass** es ein, zwei oder mehr Verbindungen ausgewählt aus der Gruppe der Verbindungen der Formeln I-1 bis I-11 enthält:

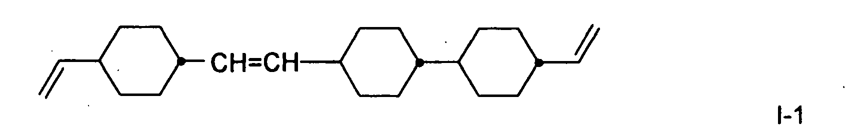

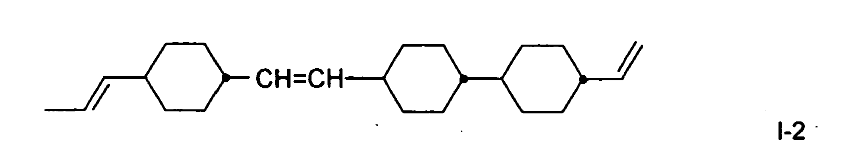

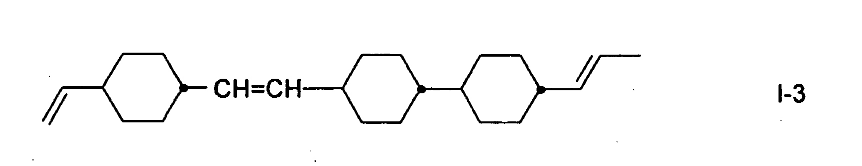

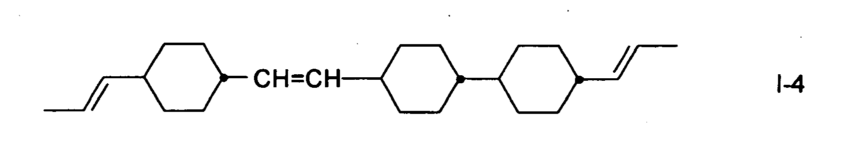

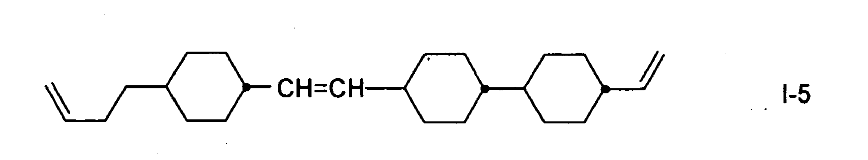

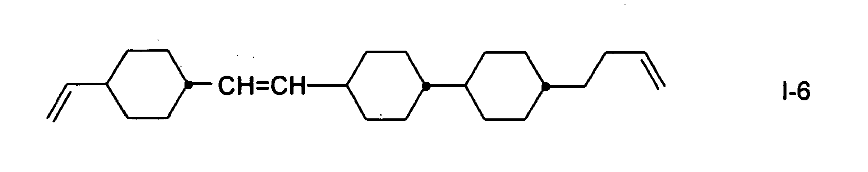

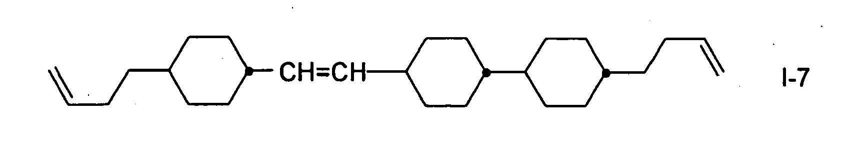

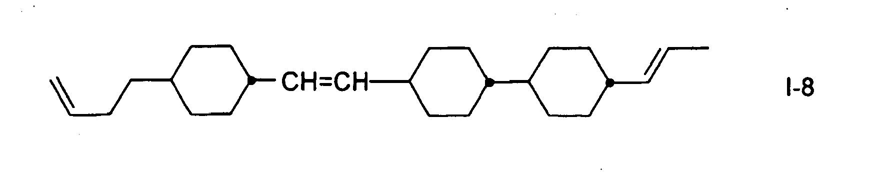

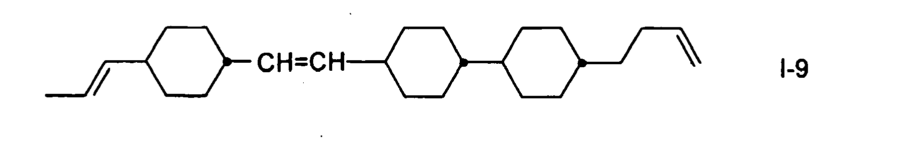

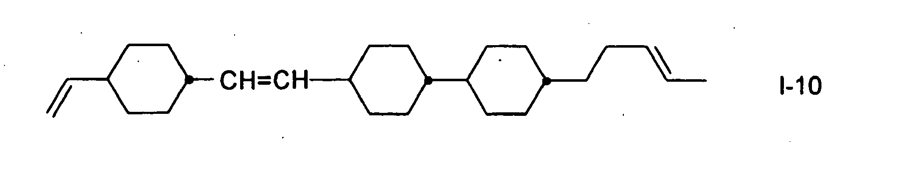

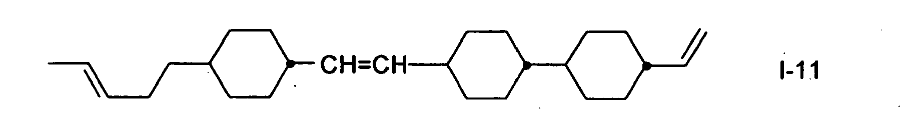

5. Flüssigkristallines Medium gemäß Anspruch 4, **dadurch gekennzeichnet, dass** es eine Verbindung der Formel I-1 enthält.

6. Flüssigkristallines Medium gemäß einem oder mehreren der Ansprüche 1 bis 5, **dadurch gekennzeichnet, dass** es zusätzlich eine oder mehrere Verbindungen ausgewählt aus der Gruppe der Verbindungen der allgemeinen Formeln Z-1 bis Z-11 enthält: 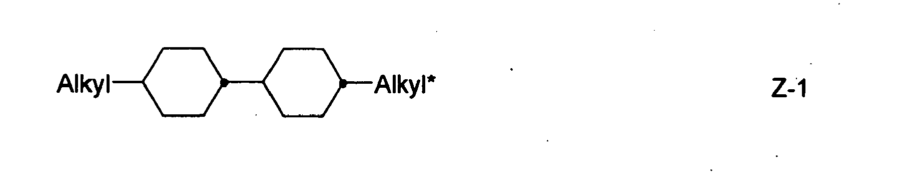 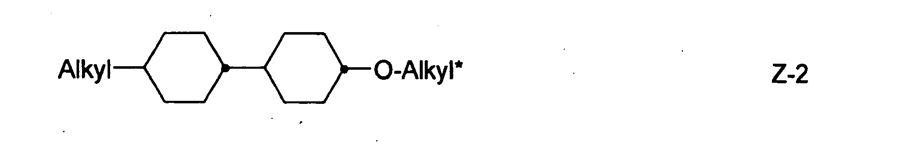 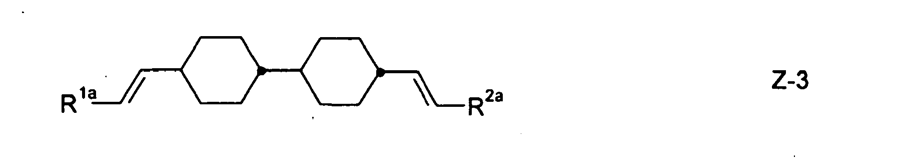 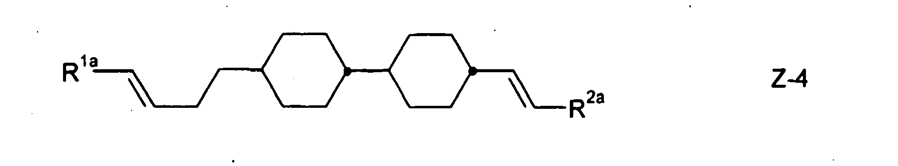 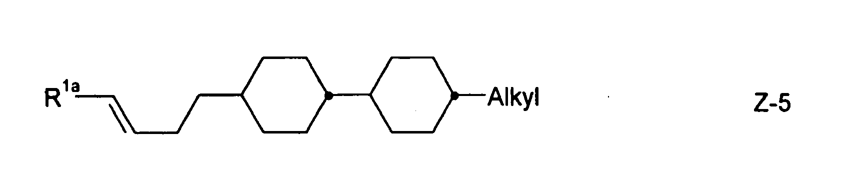 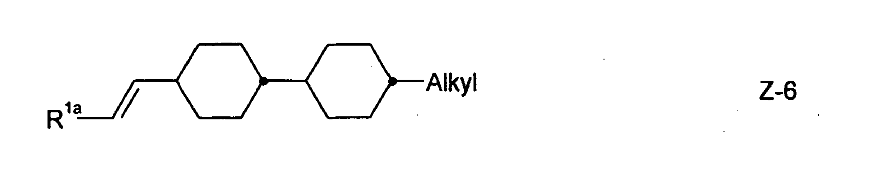 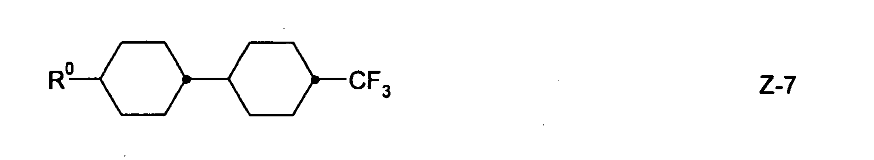 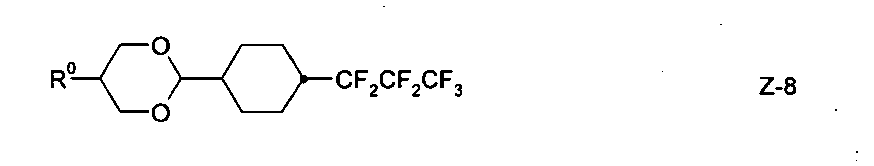 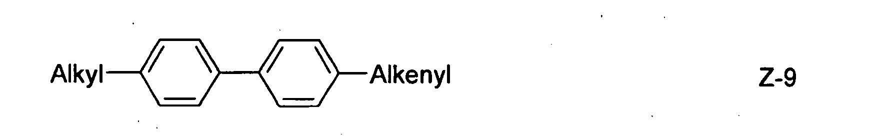 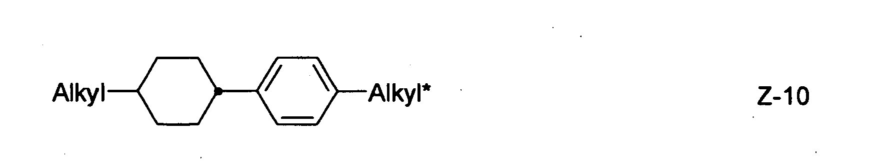 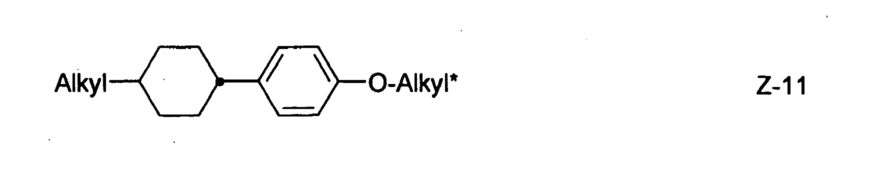 worin
R^{1a} und R^{2a} jeweils unabhängig voneinander H, CH₃, C₂H₅ oder n-C₃H₇,
R⁰ n-Alkyl, Oxaalkyl, Fluoralkyl oder Alkenyl mit jeweils bis zu 9 C-Atomen,
Alkyl, Alkyl* einen unsubstituierten n-Alkylrest mit 1 bis 7 C-Atomen, und
Alkenyl einen unsubstituierten Alkenylrest mit 2-7 C-Atomen
bedeuten.

7. Flüssigkristallines Medium gemäß einem oder mehreren der Ansprüche 1 bis 6, **dadurch gekennzeichnet, dass** es zusätzlich eine oder mehrere Verbindungen ausgewählt aus der Gruppe bestehend aus den allgemeinen Formeln II, III, IV, V und VI enthält: 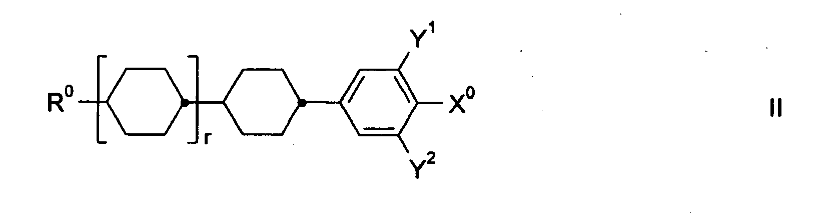 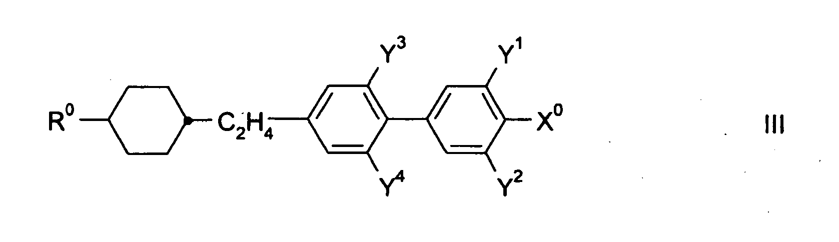 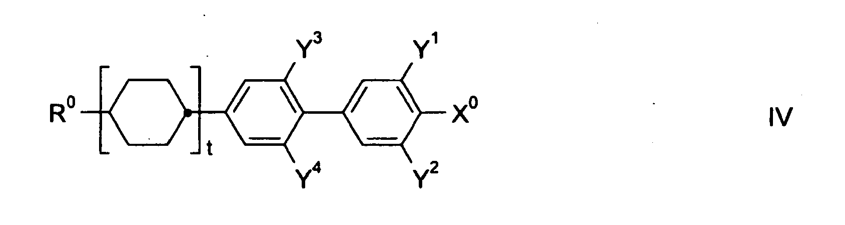 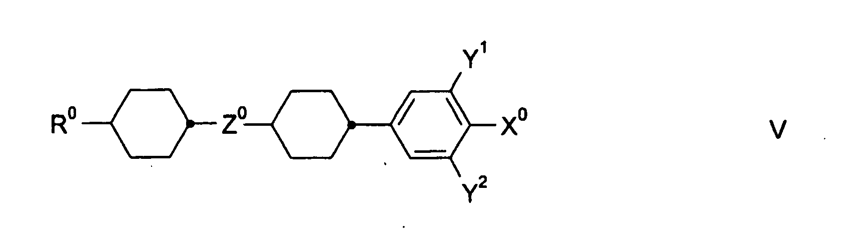 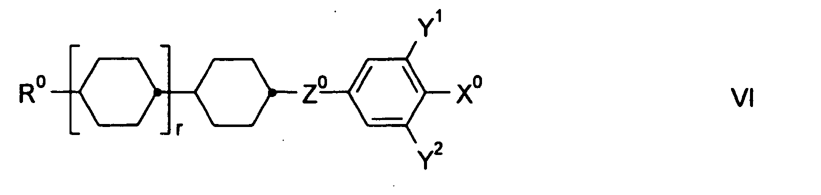 worin
R⁰ n-Alkyl, Oxaalkyl, Fluoralkyl oder Alkenyl mit jeweils bis zu 9 C-Atomen,
X⁰ F, Cl, halogeniertes Alkyl, halogeniertes Alkenyl, halogeniertes Alkenyloxy oder halogeniertes Alkoxy mit jeweils bis zu 6 C-Atomen,
Z⁰ -C₂F₄-, -CF=CF-, -C₂H₄-, -(CH₂)₄-, -OCH₂-, -CH₂O-,
Y¹ bis Y⁴ jeweils unabhängig voneinander H oder F,
r 0 oder 1, und
t 0, 1 oder 2
bedeuten.

8. Flüssigkristallines Medium gemäß einem oder mehreren der Ansprüche 1 bis 7, **dadurch gekennzeichnet, dass** es zusätzlich eine oder mehrere Verbindungen ausgewählt aus der Gruppe bestehend aus den Verbindungen der allgemeinen Formeln XIV und XV enthält: 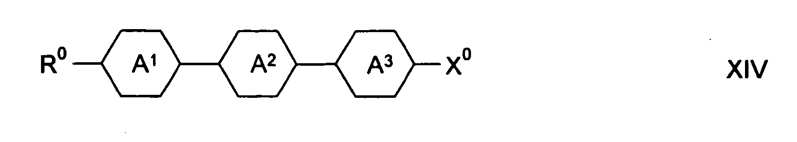 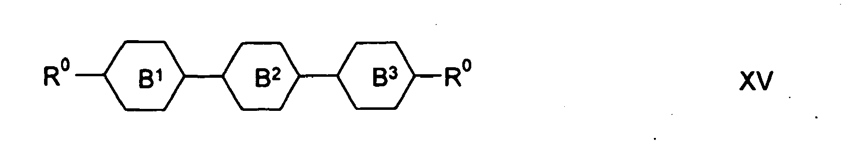 worin
R⁰ n-Alkyl, Oxaalkyl, Fluoralkyl oder Alkenyl mit jeweils bis zu 9 C-Atomen,
X⁰ F, Cl, halogeniertes Alkyl, halogeniertes Alkenyl, halogeniertes Alkenyloxy oder halogeniertes Alkoxy mit bis zu 6 C-Atomen
Ringe A¹, A², A³, B¹, B² und B³, unabhängig voneinander, 1,4-Phenylen mit 0, 1, oder 2 Fluor substituiert, und wobei in jeder Verbindung der Formeln XIV und XV mindestens einer der 1,4-Phenylenringe ein- oder mehrfach durch Fluoratome substituiert ist,
bedeuten.

9. Flüssigkristallines Medium gemäß einem oder mehreren der Ansprüche 1 bis 8, **dadurch gekennzeichnet, dass** es eine oder mehrere Verbindungen der Formeln IIa bis IIg, 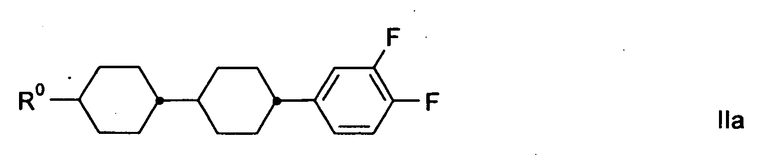 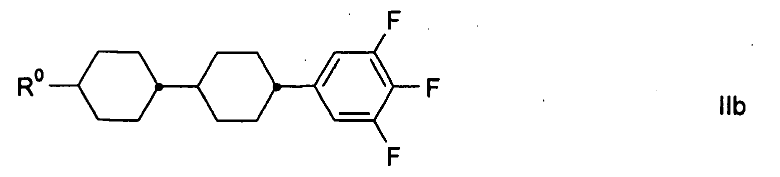 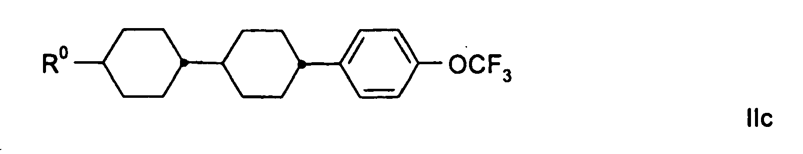 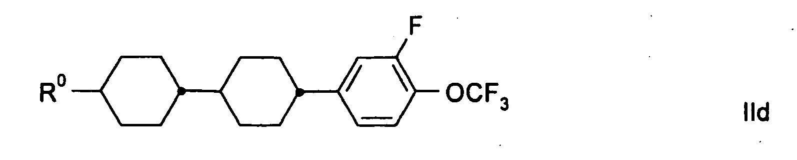 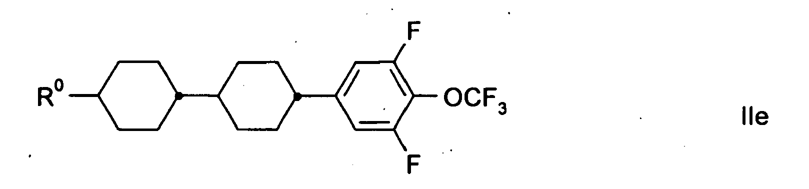 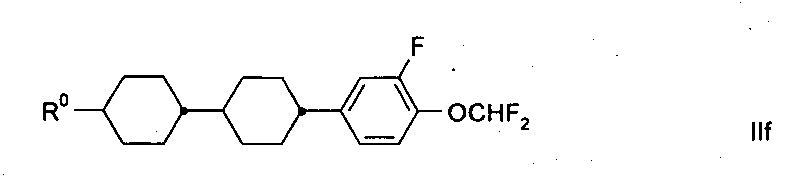 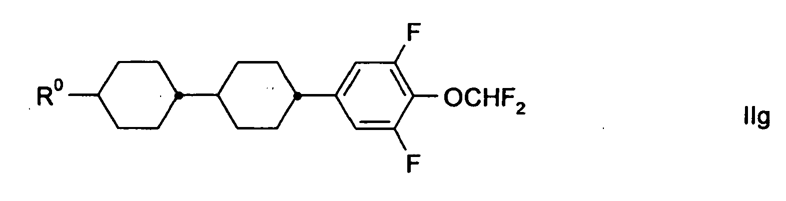 worin R⁰ die in Anspruch 6 angegebenen Bedeutungen hat,
enthält.

10. Flüssigkristallines Medium gemäß einem oder mehreren der Ansprüche 1 bis 9, **dadurch gekennzeichnet, dass** es ein oder mehrere Dioxan-Verbindungen der Formeln D1 und/oder D2, 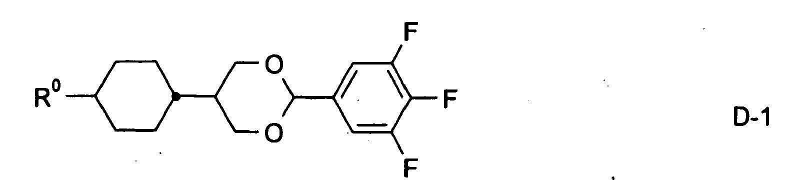 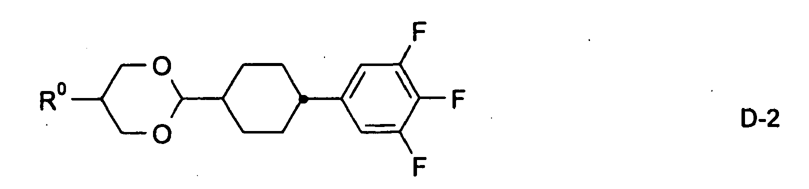 worin
R⁰ die in Anspruch 6 angegebenen Bedeutungen hat,
enthält.

11. Verfahren zur Herstellung eines flüssigkristallinen Mediums gemäß einem oder mehreren der Ansprüche 1 bis 10, **dadurch gekennzeichnet, dass** eine Verbindung oder mehrere Verbindungen der Formel I und eine oder mehrere Verbindungen ausgewählt aus der Gruppe der Verbindungen der Formeln K-1 bis K-11 gemäß Anspruch 1 mit einer weiteren Verbindung oder mehreren weiteren Verbindungen gemischt wird bzw. werden.

12. Verwendung des flüssigkristallinen Mediums gemäß einem oder mehreren der Ansprüche 1 bis 10 für elektrooptische Zwecke.

13. Elektrooptische Flüssigkristallanzeige enthaltend ein flüssigkristallines Medium gemäß einem oder mehreren der Ansprüche 1 bis 10.

14. Elektrooptische Flüssigkristallanzeige gemäß Anspruch 13, **dadurch gekennzeichnet, dass** es sich um eine TN- oder um eine IPS-Anzeige handelt.

15. Verfahren zur Herstellung einer elektrooptischen Flüssigkristallanzeige gemäß einem oder beiden der Ansprüche 13 und 14, **dadurch gekennzeichnet, dass** ein flüssigkristallines Medium gemäß einem oder mehreren der Ansprüche 1 bis 10 verwendet wird.

## Claims

1. Liquid-crystalline medium of positive dielectric anisotropy based on a mixture of compounds, **characterised in that** it comprises one or more compounds of the formula I 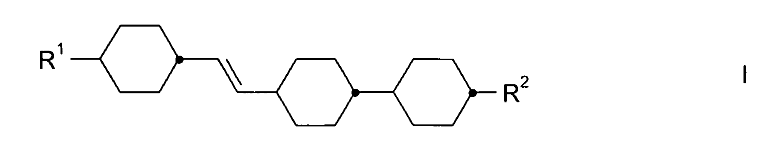 in which
R¹ and R², independently of one another, denote an alkenyl radical having up to 15 C atoms which is unsubstituted or at least monosubstituted by halogen,
and in addition one or more compounds of the general formulae K-1 to K-11: 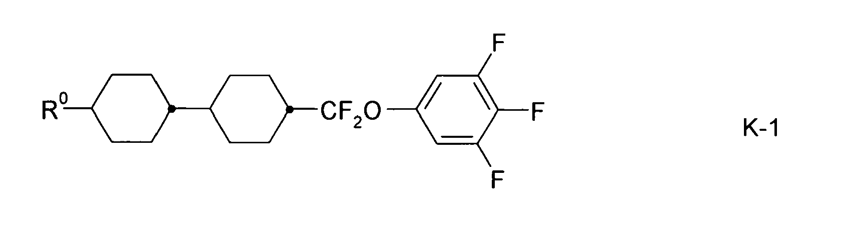 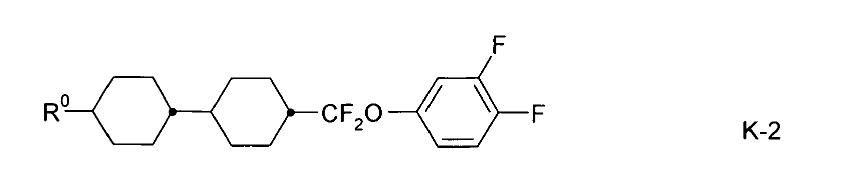 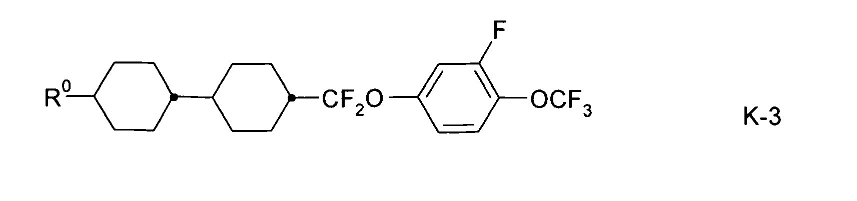 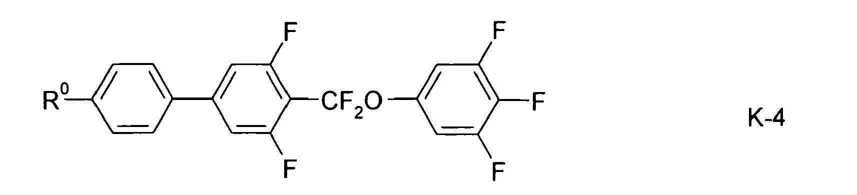 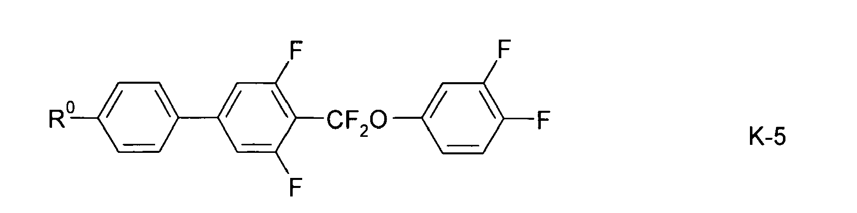 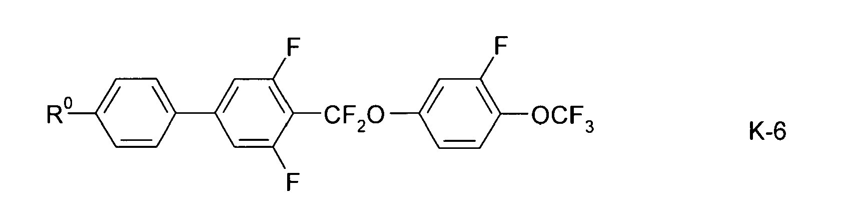 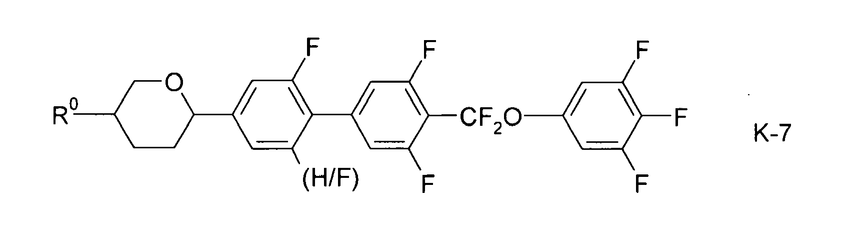 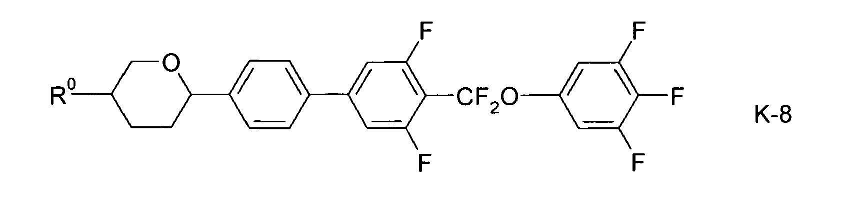 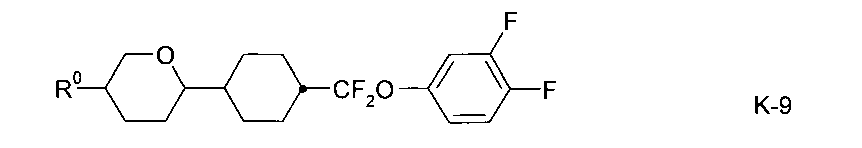 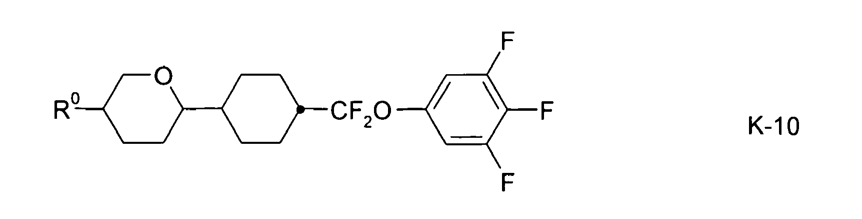 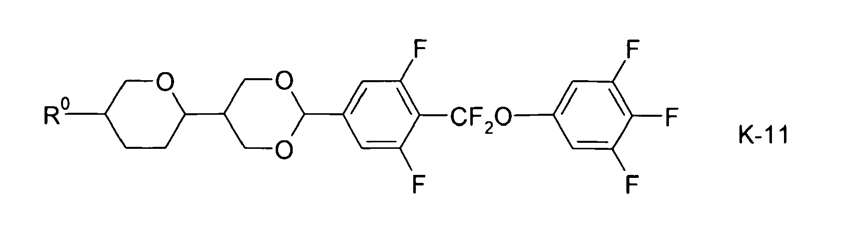 in which
R⁰ denotes n-alkyl, oxaalkyl, fluoroalkyl or alkenyl, each having up to 9 C atoms.

2. Liquid-crystalline medium according to Claim 1, **characterised in that** it comprises one or more compounds of the formula I in which
R¹ and R², independently of one another, denote an unsubstituted alkenyl radical having up to 15 C atoms.

3. Liquid-crystalline medium according to Claim 2, **characterised in that** it comprises one or more compounds of the formula I in which
R¹ and R², independently of one another, denote (CH₂)ₙ-CH=CH-(CH₂)ₘH, in which n and m, independently of one another, denote an integer from 0 to 5.

4. Liquid-crystalline medium according to one or more of Claims 1 to 3, **characterised in that** it comprises one, two or more compounds selected from the group of the compounds of the formulae I-1 to I-11:

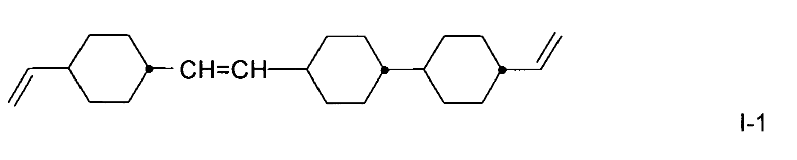

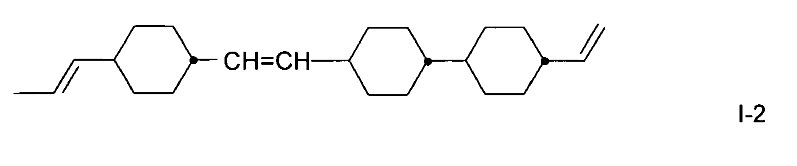

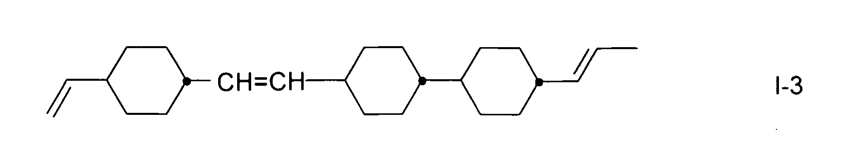

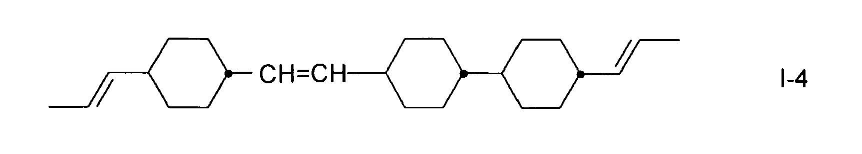

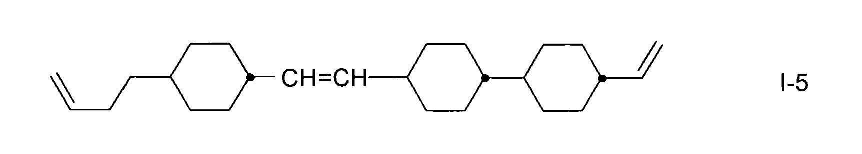

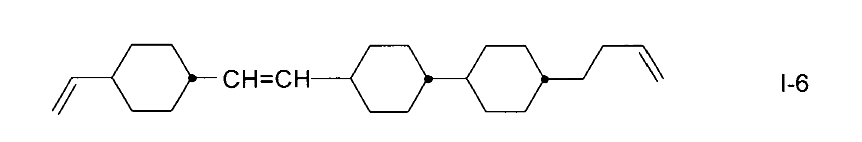

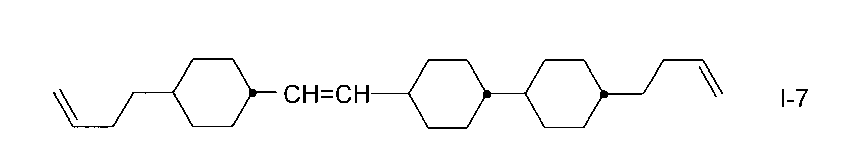

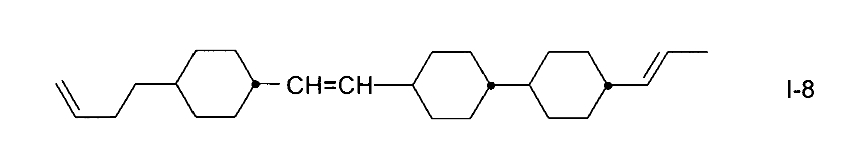

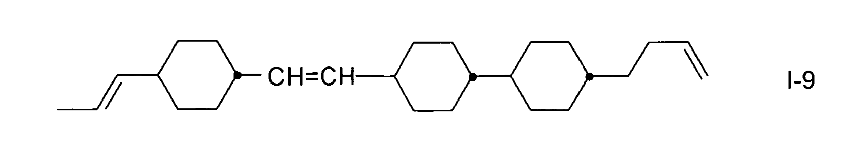

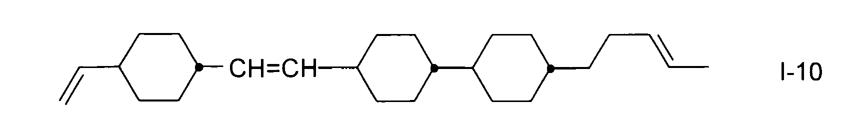

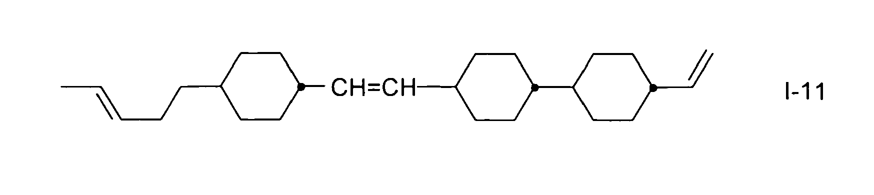

5. Liquid-crystalline medium according to Claim 4, **characterised in that** it comprises a compound of the formula I-1.

6. Liquid-crystalline medium according to one or more of Claims 1 to 5, **characterised in that** it additionally comprises one or more compounds selected from the group of the compounds of the general formulae Z-1 to Z-11: 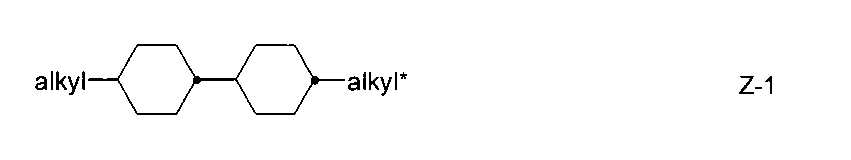 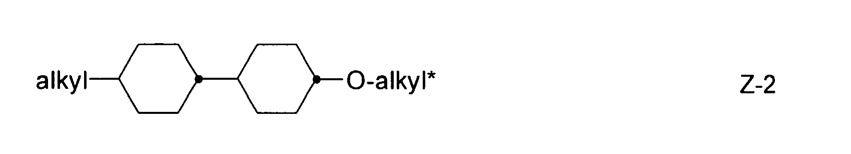 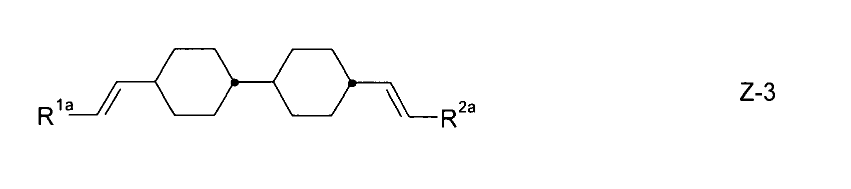 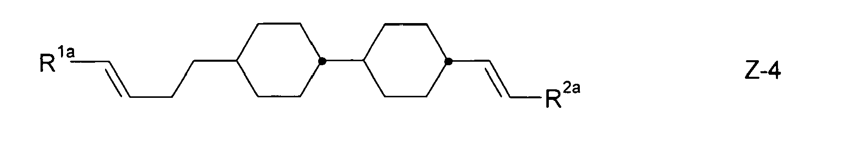 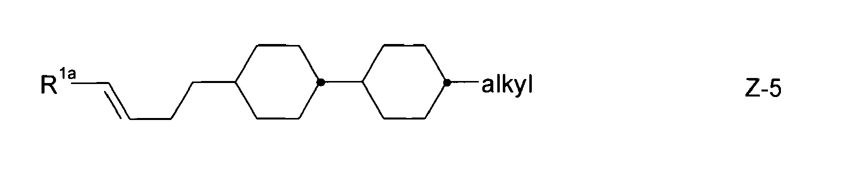 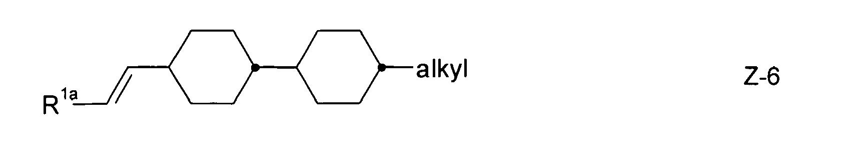 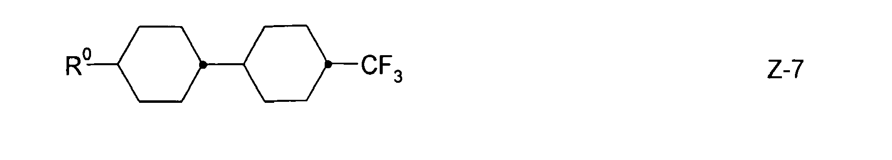 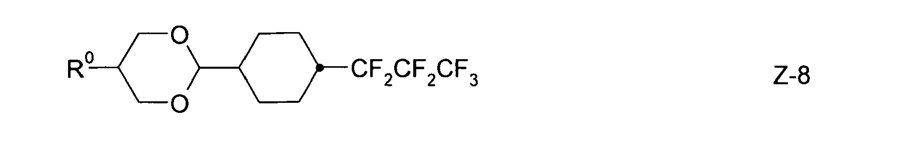 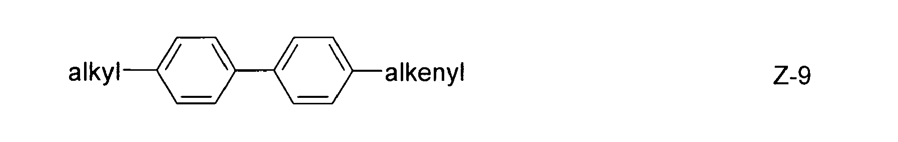 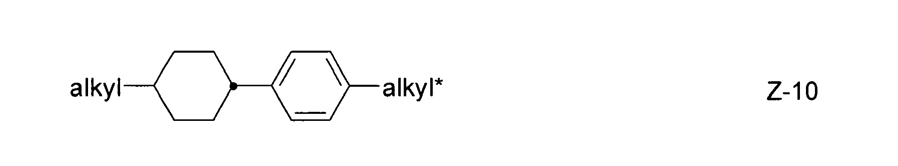 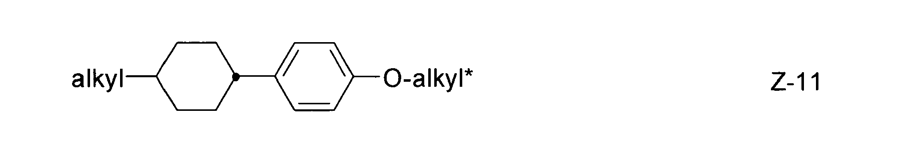 in which
R^{1a} and R^{2a} each, independently of one another, denote H, CH₃, C₂H₅ or n-C₃H₇,
R⁰ denotes n-alkyl, oxaalkyl, fluoroalkyl or alkenyl, each having up to 9 C atoms,
alkyl, alkyl* denote an unsubstituted n-alkyl radical having 1 to 7 C atoms, and
alkenyl denotes an unsubstituted alkenyl radical having 2-7 C atoms.

7. Liquid-crystalline medium according to one or more of Claims 1 to 6, **characterised in that** it additionally comprises one or more compounds selected from the group consisting of the general formulae II, III, IV, V and VI: 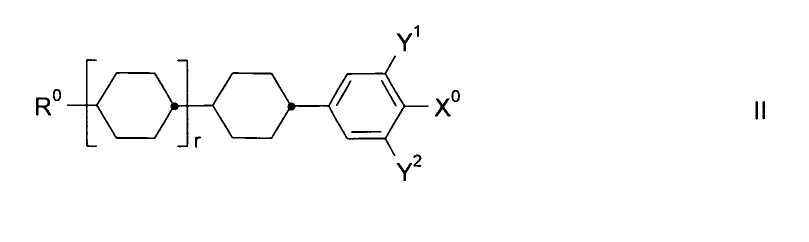 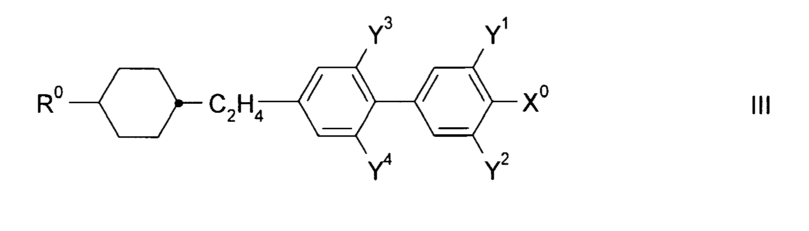 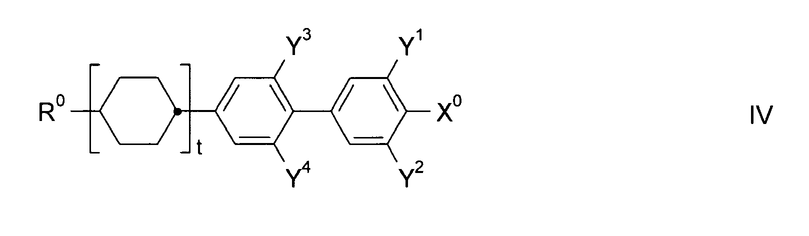 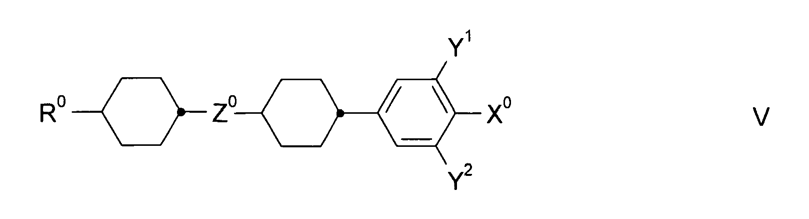 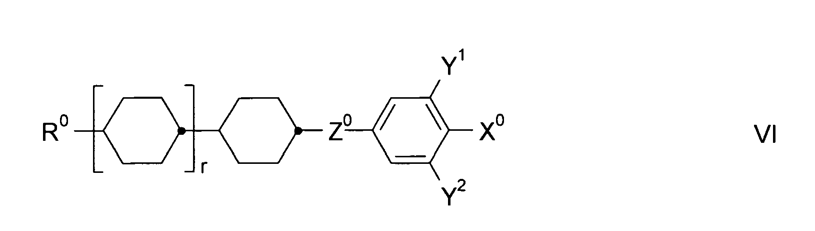 in which
R⁰ denotes n-alkyl, oxaalkyl, fluoroalkyl or alkenyl, each having up to 9 C atoms,
X⁰ denotes F, Cl, halogenated alkyl, halogenated alkenyl, halogenated alkenyloxy or halogenated alkoxy, each having up to 6 C atoms,
Z⁰ denotes -C₂F₄-, -CF=CF-, -C₂H₄-, -(CH₂)₄-, -OCH₂-, -CH₂O-,
Y¹ to Y⁴ each, independently of one another, denote H or F,
r denotes 0 or 1, and
t denotes 0, 1 or 2.

8. Liquid-crystalline medium according to one or more of Claims 1 to 7, **characterised in that** it additionally comprises one or more compounds selected from the group consisting of the compounds of the general formulae XIV and XV: 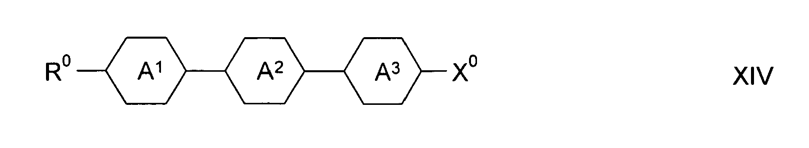 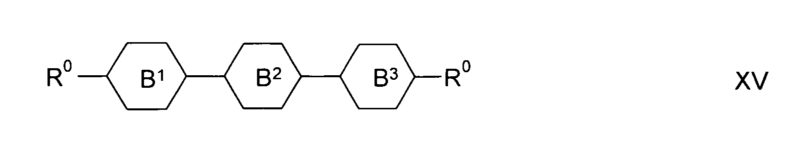 in which
R⁰ denotes n-alkyl, oxaalkyl, fluoroalkyl or alkenyl, each having up to 9 C atoms,
X⁰ denotes F, Cl, halogenated alkyl, halogenated alkenyl, halogenated alkenyloxy or halogenated alkoxy having up to 6 C atoms,
rings A¹, A², A³, B¹, B² and B³, independently of one another, denote 1,4-phenylene substituted by 0, 1 or 2 fluorine, and where at least one of the 1,4-phenylene rings in each compound of the formulae XIV and XV is mono- or polysubstituted by fluorine atoms.

9. Liquid-crystalline medium according to one or more of Claims 1 to 8, **characterised in that** it comprises one or more compounds of the formulae IIa to IIg: 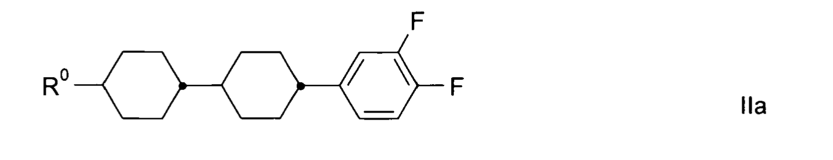 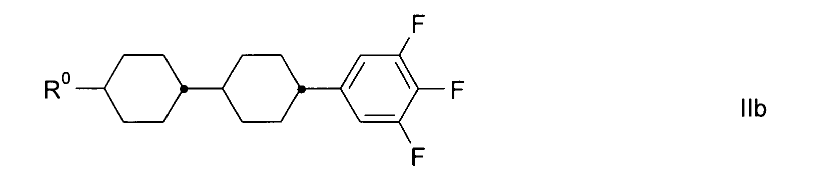 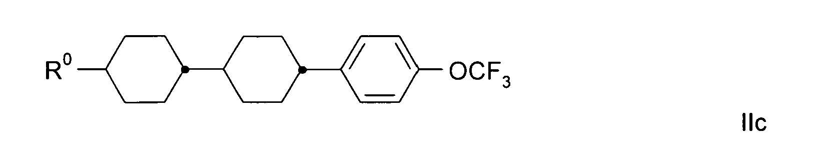 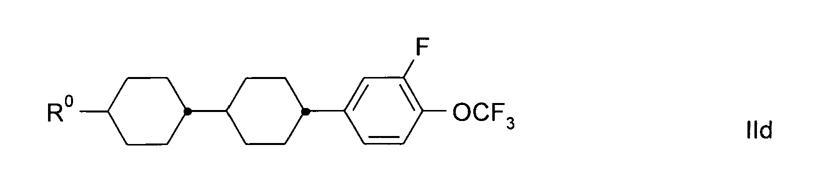 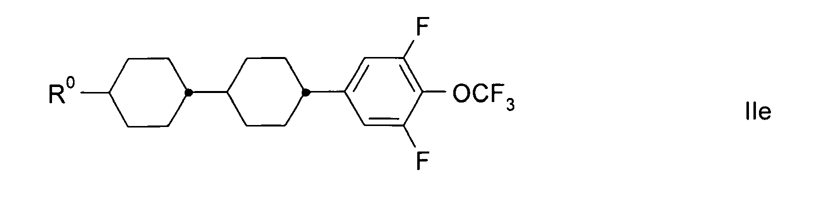 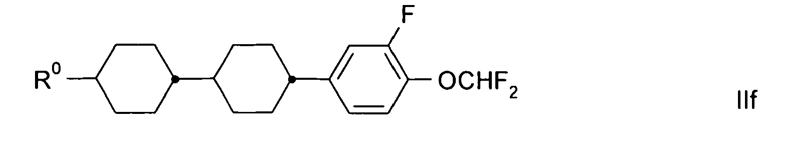 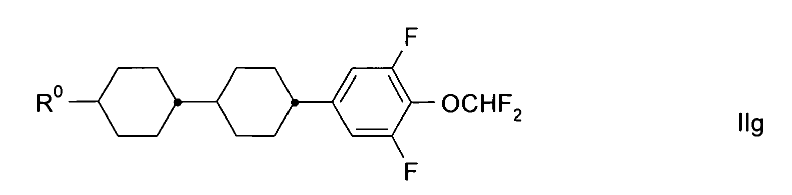 in which R⁰ has the meanings indicated in Claim 6.

10. Liquid-crystalline medium according to one or more of Claims 1 to 9, **characterised in that** it comprises one or more dioxane compounds of the formulae D1 and/or D2: 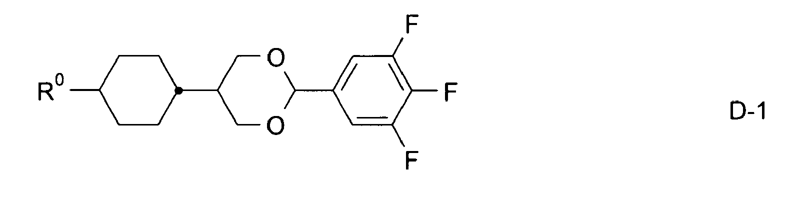 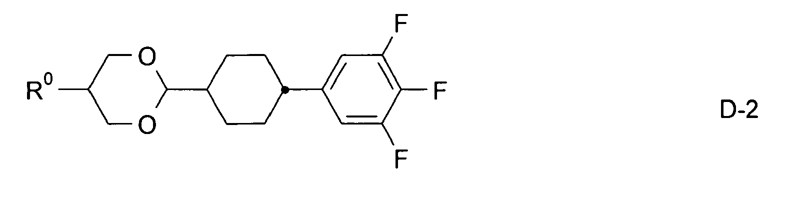 in which
R⁰ has the meanings indicated in Claim 6.

11. Process for the preparation of a liquid-crystalline medium according to one or more of Claims 1 to 10, **characterised in that** a compound or a plurality of compounds of the formula I and one or more compounds selected from the group of the compounds of the formulae K-1 to K-11 according to Claim 1 is or are mixed with a further compound or a plurality of further compounds.

12. Use of the liquid-crystalline medium according to one or more of Claims 1 to 10 for electro-optical purposes.

13. Electro-optical liquid-crystal display containing a liquid-crystalline medium according to one or more of Claims 1 to 10.

14. Electro-optical liquid-crystal display according to Claim 13, **characterised in that** it is a TN or IPS display.

15. Process for the production of an electro-optical liquid-crystal display according to one or both of Claims 13 and 14, **characterised in that** a liquid-crystalline medium according to one or more of Claims 1 to 10 is used.

## Revendications

1. Milieu cristallin liquide d'anisotropie diélectrique positive basé sur un mélange de composés, **caractérisé en ce qu'**il comprend un ou plusieurs composés de la formule I 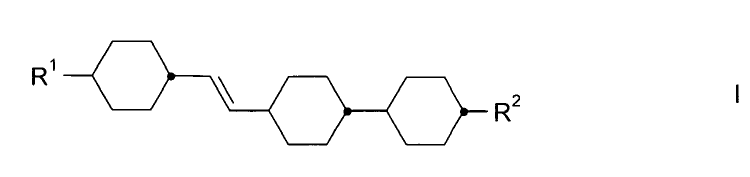 dans laquelle
R¹ et R², indépendamment l'un de l'autre, représente un radical alkényle ayant jusqu'à 15 atomes de C qui est non substitué ou au moins monosubstitué par halogène,
et en addition un ou plusieurs composés des formules générales K-1 à K-11: 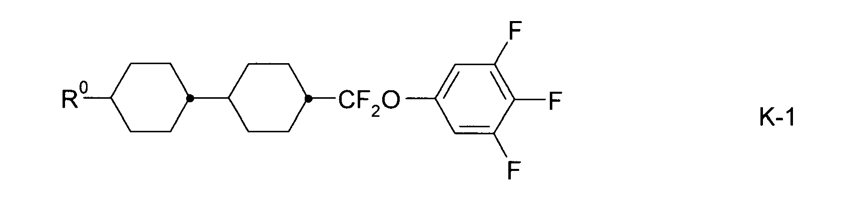 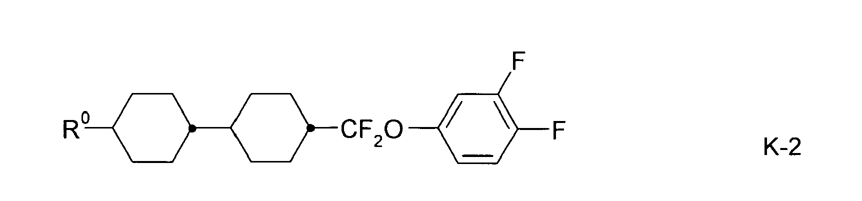 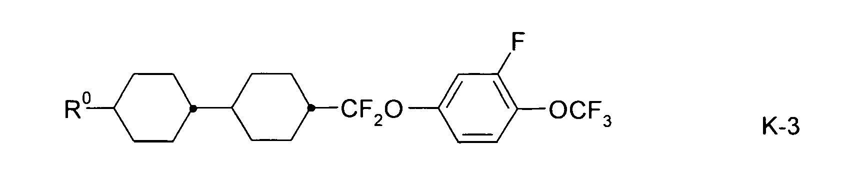 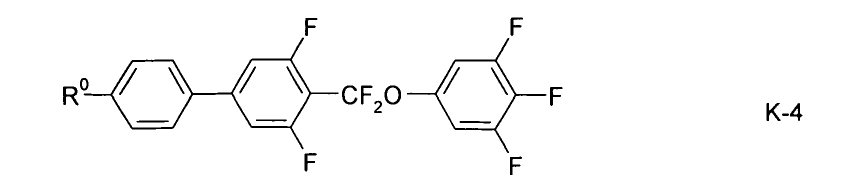 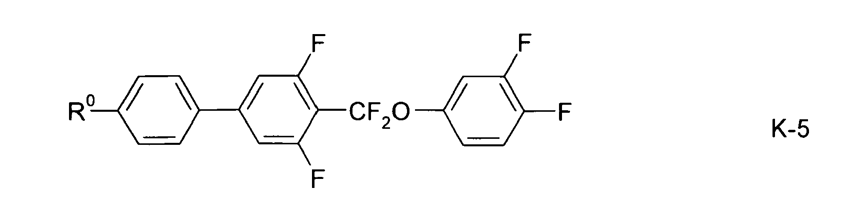 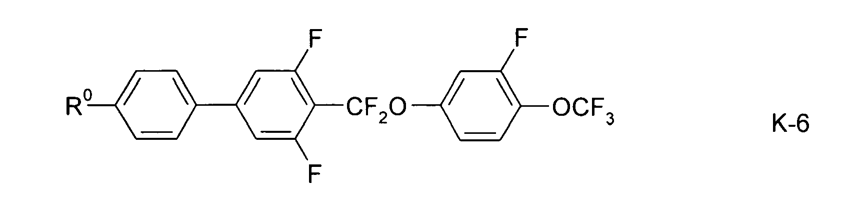 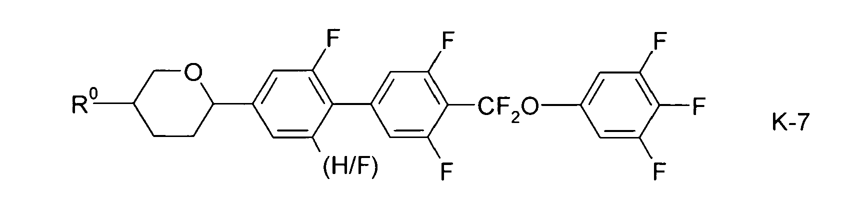 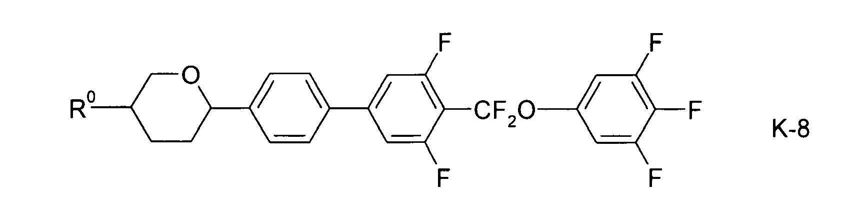 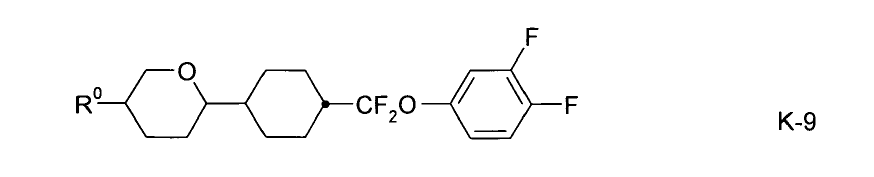 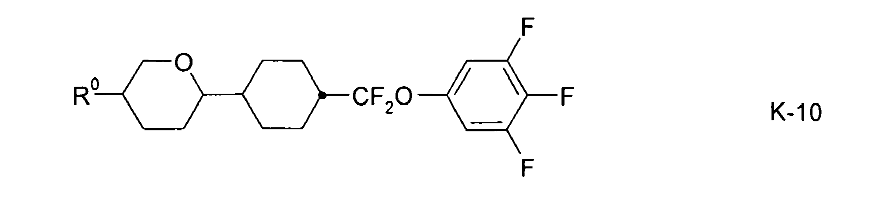 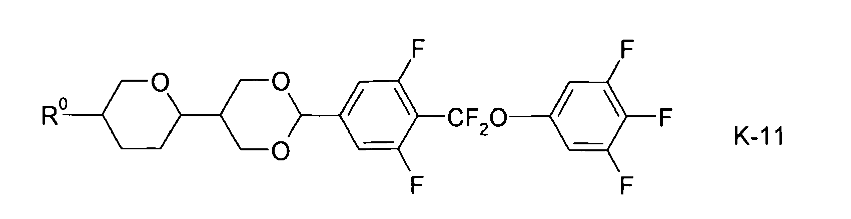 dans lesquelles
R⁰ représente n-alkyle, oxaalkyle, fluoroalkyle ou alkényle, chacun ayant jusqu'à 9 atomes de C.

2. Milieu cristallin liquide selon la revendication 1, **caractérisé en ce qu'**il comprend un ou plusieurs composés de la formule I dans laquelle
R¹ et R², indépendamment l'un de l'autre, représentent un radical alkényle non substitué ayant jusqu'à 15 atomes de C.

3. Milieu cristallin liquide selon la revendication 2, **caractérisé en ce qu'**il comprend un ou plusieurs composés de la formule I dans laquelle
R¹ et R², indépendamment l'un de l'autre, représentent (CH₂)ₙ-CH=CH-(CH₂)ₘH, dans lequel n et m, indépendamment l'un de l'autre, représentent un entier de 0 à 5.

4. Milieu cristallin liquide selon une ou plusieurs des revendications 1 à 3, **caractérisé en ce qu'**il comprend un, deux ou plus de deux composés choisis parmi le groupe des composés des formules I-1 à I-11:

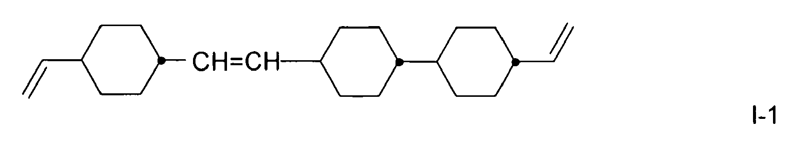

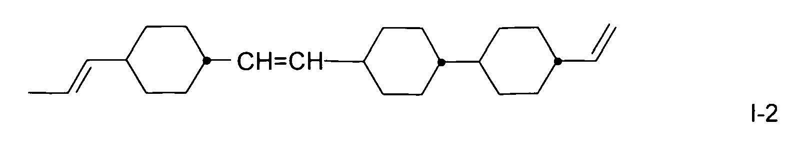

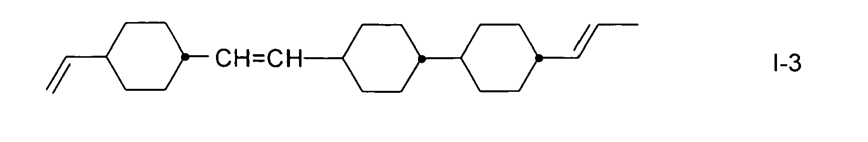

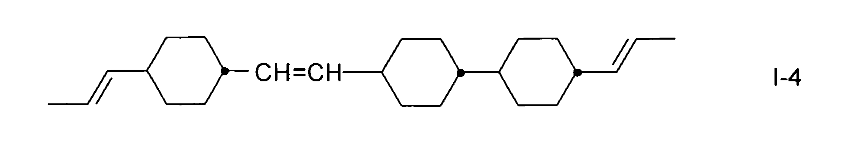

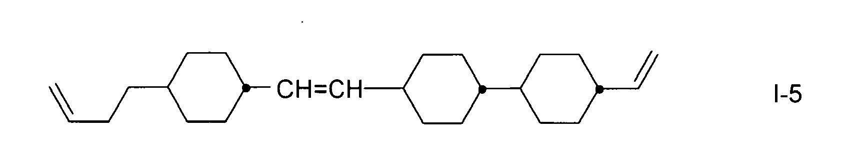

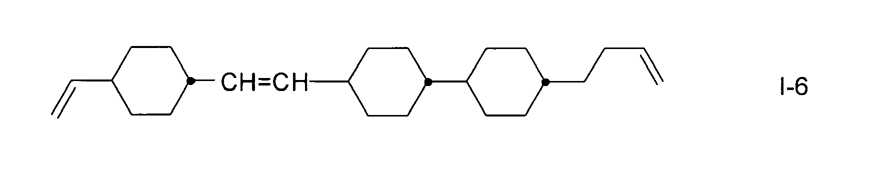

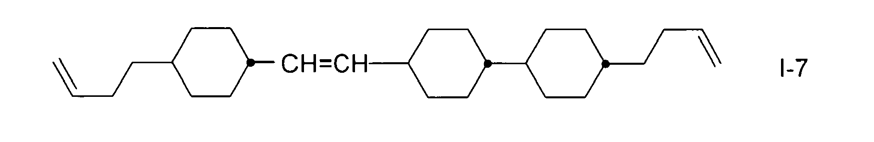

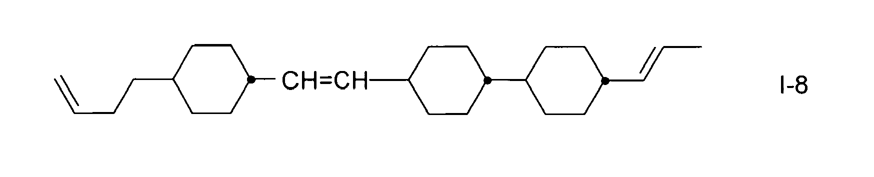

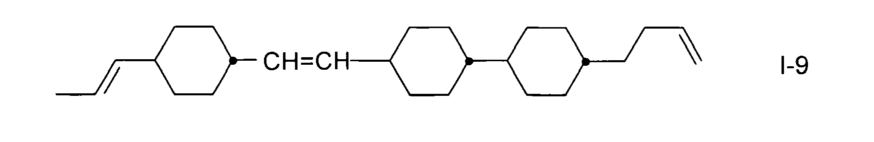

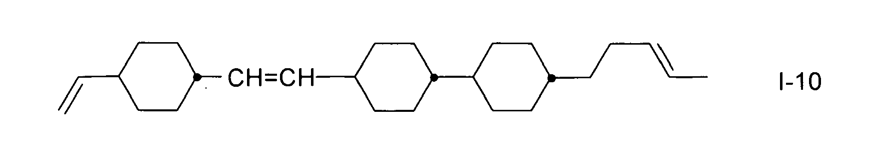

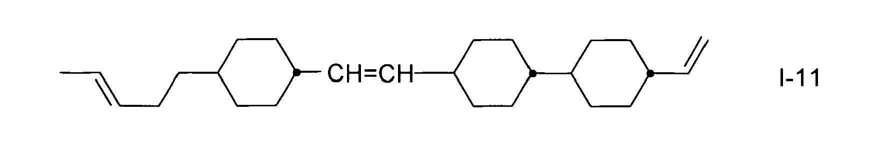

5. Milieu cristallin liquide selon la revendication 4, **caractérisé en ce qu'**il comprend un composé de la formule I-1.

6. Milieu cristallin liquide selon une ou plusieurs des revendications 1 à 5, **caractérisé en ce qu'**il comprend additionnellement un ou plusieurs composés choisis parmi le groupe des composés des formules générales Z-1 à Z-11: 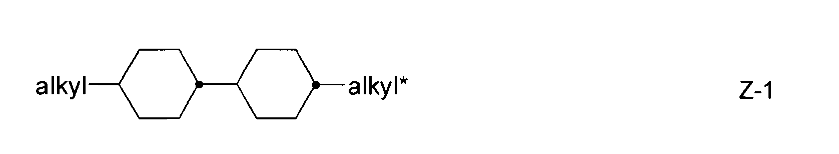 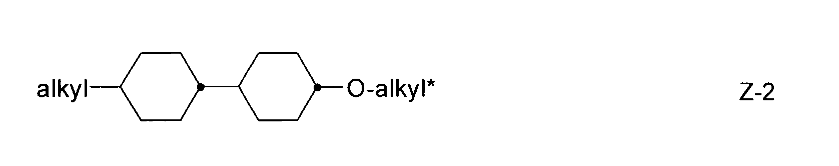 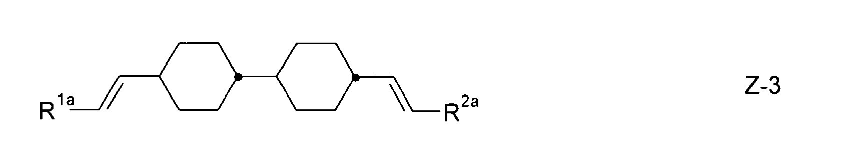 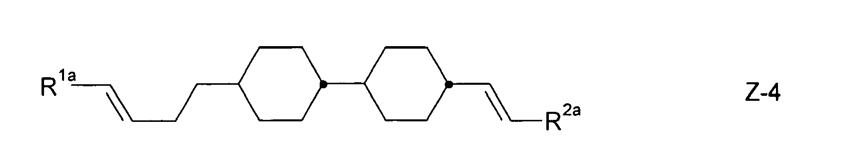 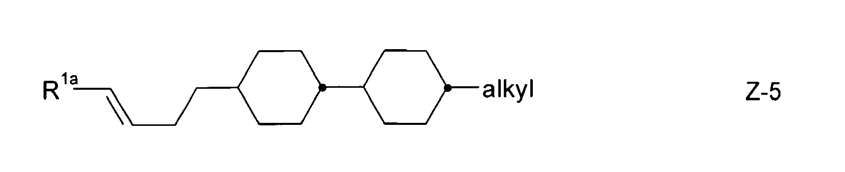 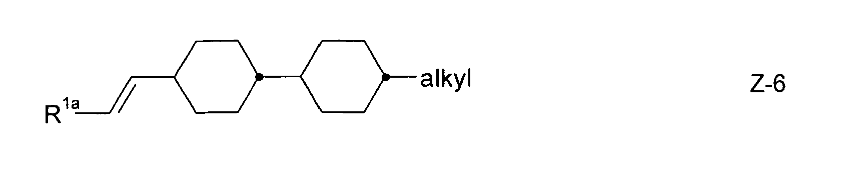 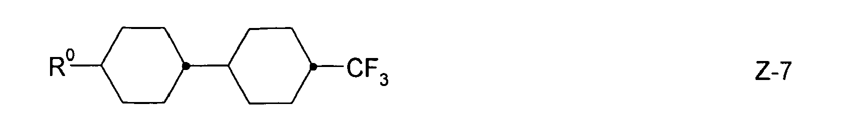 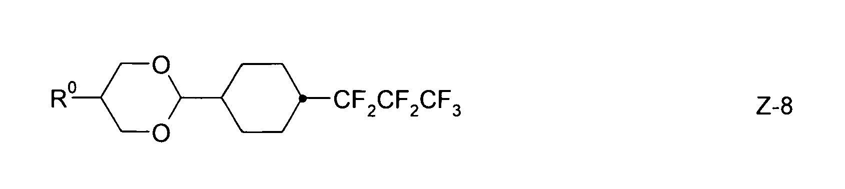 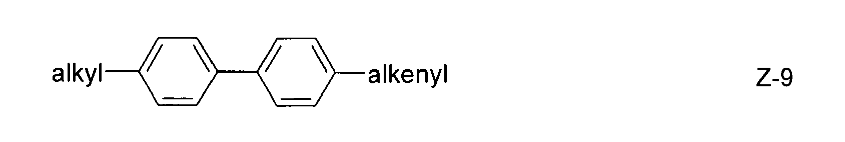 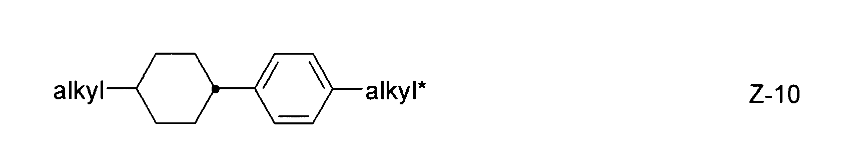 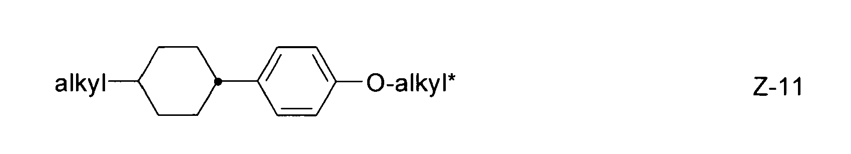 dans lesquelles
R^{1a} et R^{2a} chacun, indépendamment l'un de l'autre, représentent H, CH₃, C₂H₅ ou n-C₃H₇,
R⁰ représente n-alkyle, oxaalkyle, fluoroalkyle ou alkényle, chacun ayant jusqu'à 9 atomes de C,
alkyl, alkyl* représentent un radical n-alkyle non substitué ayant 1 à 7 atomes de C, et
alkenyl représente un radical alkényle non substitué ayant 2-7 atomes de C.

7. Milieu cristallin liquide selon une ou plusieurs des revendications 1 à 6, **caractérisé en ce qu'**il comprend additionnellement un ou plusieurs composés choisis parmi le groupe constitué des formules générales II, III, IV, V et VI: 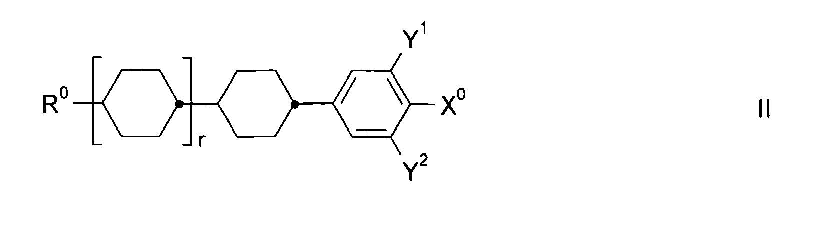 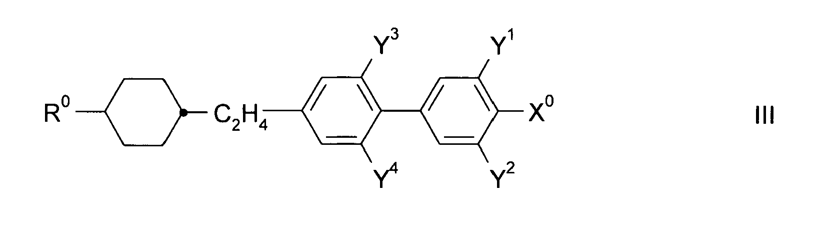 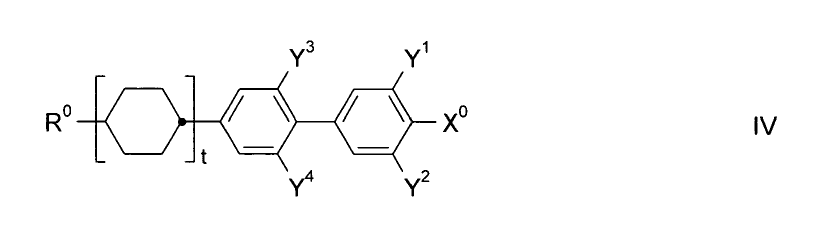 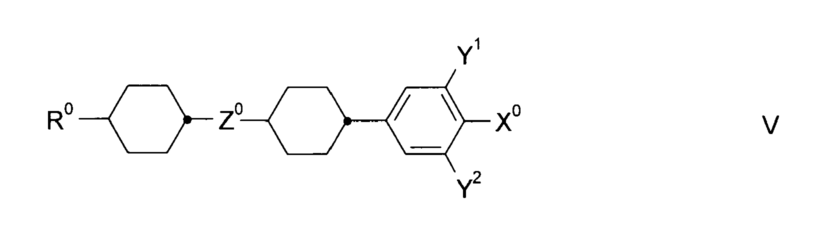 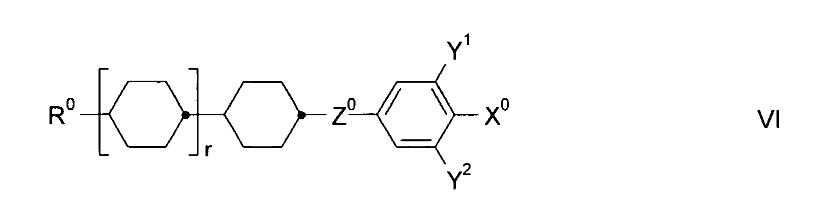 dans lesquelles
R⁰ représente n-alkyle, oxaalkyle, fluoroalkyle ou alkényle, chacun ayant jusqu'à 9 atomes de C,
X⁰ représente F, CI, alkyle halogéné, alkényle halogéné, alkényloxy halogéné ou alcoxy halogéné, chacun ayant jusqu'à 6 atomes de C,
Z⁰ représente -C₂F₄-, -CF=CF-, -C₂H₄-, -(CH₂)₄-, -OCH₂-, -CH₂O-,
Y¹ à Y⁴ chacun, indépendamment l'un de l'autre, représentent H ou F,
r représente 0 ou 1, et
t représente 0, 1 ou 2.

8. Milieu cristallin liquide selon une ou plusieurs des revendications 1 à 7, **caractérisé en ce qu'**il comprend additionnellement un ou plusieurs composés choisis parmi le groupe constitué des composés des formules générales XIV et XV: 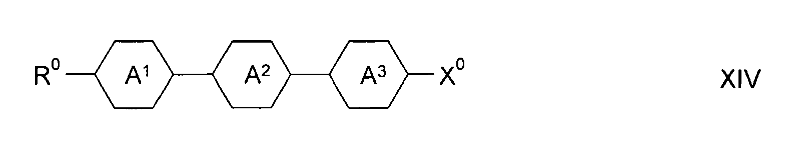 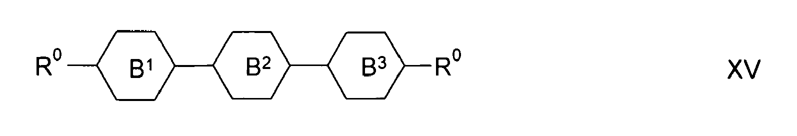 dans lesquelles
R⁰ représente n-alkyle, oxaalkyle, fluoroalkyle ou alkényle, chacun ayant jusqu'à 9 atomes de C,
X⁰ représente F, CI, alkyle halogéné, alkényle halogéné, alkényloxy halogéné ou alcoxy halogéné ayant jusqu'à 6 atomes de C,
cycles A¹, A², A³, B¹, B² et B³, indépendamment l'un de l'autre, représentent 1,4-phenylène substitué par 0, 1 ou 2 fluors, et dans lequel au moins un des cycles 1,4-phénylène dans chaque composé des formules XIV et XV est mono- ou polysubstitué par des atomes de fluor.

9. Milieu cristallin liquide selon une ou plusieurs des revendications 1 à 8, **caractérisé en ce qu'**il comprend un ou plusieurs composés des formules IIa à IIg: 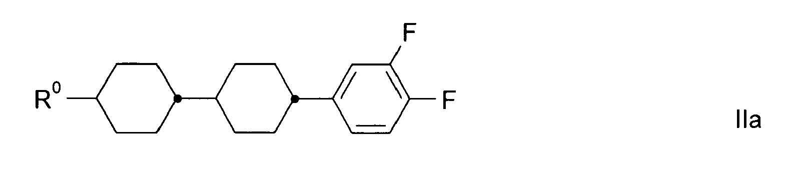 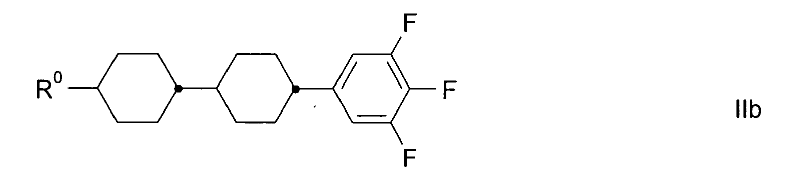 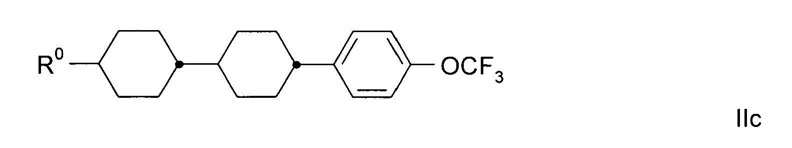 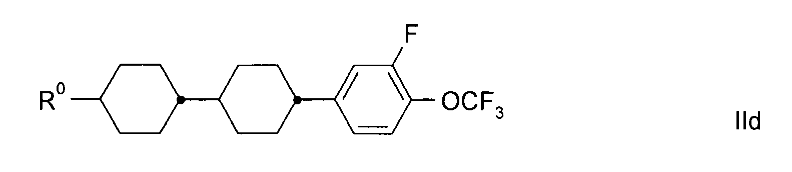 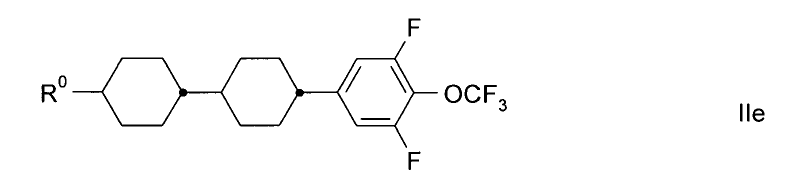 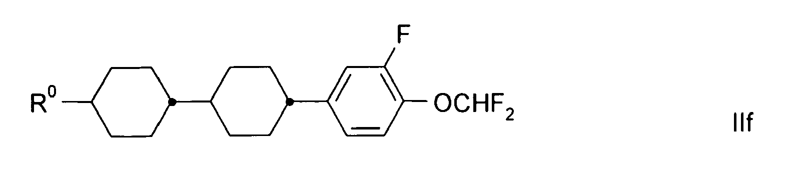 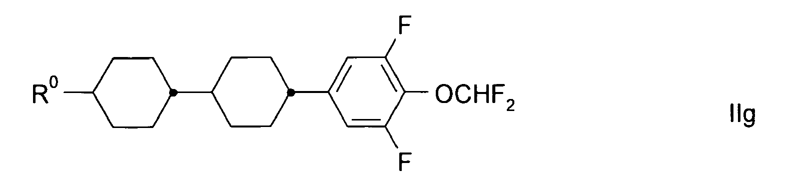 dans lesquelles R⁰ a les significations indiquées dans la revendication 6.

10. Milieu cristallin liquide selon une ou plusieurs des revendications 1 à 9, **caractérisé en ce qu'**il comprend un ou plusieurs composés dioxane des formules D1 et/ou D2: 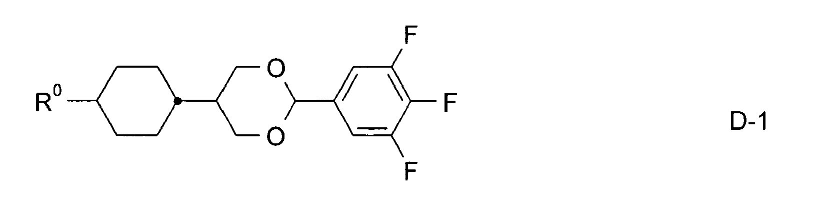 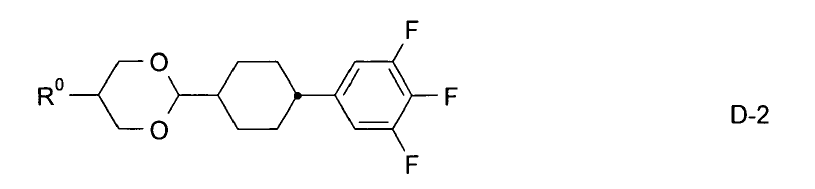 dans lesquelles
R⁰ a les significations indiquées dans la revendication 6.

11. Procédé pour la préparation d'un milieu cristallin liquide selon une ou plusieurs des revendications 1 à 10, **caractérisé en ce qu'**un composé ou une pluralité de composés de la formule I et un ou plusieurs composés choisis parmi le groupe des composés des formules K-1 à K-11 selon la revendication 1 est ou sont mélangés avec un composé supplémentaire ou une pluralité de composés supplémentaires.

12. utilisation du milieu cristallin liquide selon une ou plusieurs des revendications 1 à 10 pour des buts électro-optiques.

13. Affichage à cristal liquide électro-optique contenant un milieu cristallin liquide selon une ou plusieurs des revendications 1 à 10.

14. Affichage à cristal liquide électro-optique selon la revendication 13, **caractérisé en ce qu'**il est un affichage TN ou IPS.

15. Procédé pour la production d'un affichage à cristal liquide électro-optique selon une des revendications ou les deux revendication 13 et 14, **caractérisé en ce qu'**un milieu cristallin liquide selon une ou plusieurs des revendications 1 à 10 est utilisé.
